(19) Europäisches Patentamt
European Patent Office
Office européen des brevets

(11) EP 4 668 683 A1

(12) EUROPEAN PATENT APPLICATION
published in accordance with Art. 153(4) EPC

(43) Date of publication:
24.12.2025 Bulletin 2025/52

(51) International Patent Classification (IPC):
H04L 25/03 (2006.01)

(21) Application number: 24756183.0

(22) Date of filing: 07.02.2024

(52) Cooperative Patent Classification (CPC):
H04L 25/03; H04L 27/26

(86) International application number:
PCT/CN2024/076501

(87) International publication number:
WO 2024/169810 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.02.2023 CN 202310132367

(71) Applicant: Vivo Mobile Communication Co., Ltd.
Dongguan, Guangdong 523863 (CN)

(72) Inventors:
• JIANG, Dajie
Dongguan, Guangdong 523863 (CN)
• WU, Jianming
Dongguan, Guangdong 523863 (CN)

(74) Representative: Shieldmark
P.O. Box 90471
2509 LL The Hague (NL)

(54) **SIGNAL TRANSMISSION METHOD AND APPARATUS, SIGNAL SENDING DEVICE, AND SIGNAL RECEIVING DEVICE**

(57) This application discloses a signal transmission method and apparatus, a signal sending device, and a signal receiving device, and belongs to the field of communication technologies. The signal transmission method according to embodiments of this application includes: A signal sending device sends a first signal based on a first resource block. The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

A signal sending device sends a first signal based on a first resource block, where the first signal includes a sensing signal, the first resource block includes a first sensing resource block, a time domain resource block of the first sensing resource block includes at least two continuous time domain units, all modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit

— 501

FIG. 5

EP 4 668 683 A1

**Description**

**CROSS-REFERENCE TO RELATED APPLICATIONS**

This application claims priority of Chinese Patent Application No. 202310132367.8 filed in China on February 15, 2023, which is incorporated herein by reference in its entirety.

**TECHNICAL FIELD**

This application belongs to the field of communication technologies, and specifically, to a signal transmission method and apparatus, a signal sending device, and a signal receiving device.

**BACKGROUND**

In a conventional orthogonal frequency division multiplexing (Orthogonal Frequency Division Multiplexing, OFDM) system, to combat channel multipath, a cyclic prefix (Cyclic Prefix, CP) needs to be placed at a tip of each OFDM symbol. However, due to insertion of the CP part, no matter what type of modulation symbol (for example, a quadrature phase-shift keying (Quadrature Phase-Shift Keying, QPSK) symbol or a quadrature amplitude modulation (Quadrature Amplitude Modulation, QAM) symbol) is sent, phases of a same sub-carrier cannot be continuous between adjacent OFDM symbols, thereby causing side-lobe leakage of a signal spectrum. Currently, by placing a weighting mask (Weighting Mask) and an overlap extension (Overlap Extension) part, an OFDM transmitting end changes a non-continuous signal phase to a continuous signal phase. Although this manner may improve the problem of side-lobe leakage of the signal spectrum, interference still occurs between the sub-carriers. Therefore, in the conventional OFDM system, a particular amount of zero-padding processing needs to be performed on both sides of an OFDM carrier, affecting a utilization rate of a frequency domain resource.

**SUMMARY**

Embodiments of this application provide a signal transmission method and apparatus, a signal sending device, and a signal receiving device, so as to reduce an impact on a utilization rate of a frequency domain resource while improving a problem of side-lobe leakage of a signal spectrum.

According to a first aspect, a signal transmission method is provided. The method includes:

A signal sending device sends a first signal based on a first resource block.

The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

According to a second aspect, a signal transmission apparatus is provided. The apparatus includes:

a sending module, configured to send a first signal based on a first resource block.

The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

According to a third aspect, a signal transmission method is provided. The method includes:

A signal receiving device receives a first signal by using a first resource block.

The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

According to a fourth aspect, a signal transmission apparatus is provided. The apparatus includes: a receiving module, configured to receive a first signal based on a first resource block.

The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

According to a fifth aspect, a signal sending device is provided. The signal sending device includes a processor and a memory. The memory stores a program or an instruction executable on the processor. The program or the instruction, when executed by the processor, implements the steps of the method according to the first aspect.

According to a sixth aspect, a signal sending device is provided, including a processor and a communication interface. The communication interface is configured to send a first signal based on a first resource block. The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

According to a seventh aspect, a signal receiving device is provided. The signal receiving device includes a processor and a memory. The memory stores a program or an instruction executable on the processor. The program or the instruction, when executed by the processor, implements the steps of the method according to the third aspect.

According to an eighth aspect, a signal receiving device is provided, including a processor and a communication interface. The communication interface is configured to receive a first signal based on a first resource block. The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

According to a ninth aspect, a signal transmission system is provided, including: a signal sending device and a signal receiving device. The terminal may be configured to perform the steps of the signal transmission method according to the first aspect. The network-side device may be configured to perform the steps of the signal transmission method according to the third aspect.

According to a tenth aspect, a readable storage medium is provided. The readable storage medium has a program or an instruction stored therein. The program or the instruction, when executed by a processor, implements the steps of the method according to the first aspect or implements the steps of the method according to the third aspect.

According to an eleventh aspect, a chip is provided. The chip includes a processor and a communication interface. The communication interface is coupled to the processor. The processor is configured to execute a program or an instruction to implement the steps of the method according to the first aspect, or implement the steps of the method according to the third aspect.

According to a twelfth aspect, a computer program/program product is provided. The computer program/program product is stored in a storage medium. The computer program/program product, when executed by at least one processor, implements the steps of the method according to the first aspect or the steps of the method according to the third aspect.

In embodiments of this application, a signal sending device sends a first signal based on a first resource block. The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit. In this application, based on the fact that the sensing signal has a deterministic feature, all modulation symbols of the time domain resource blocks on the same frequency domain unit are set to be the same, and the initial phase values of different time domain units in the time domain resource block on the same frequency domain unit are adjusted to ensure that sensing signal phases of adjacent time domain units in the time domain resource block of the first sensing resource block on the same frequency domain unit are continuous. This manner not only may reduce side-lobe leakage of a signal spectrum, but also may ensure that no waveform distortion is generated on the sensing signal, thereby avoiding inter-carrier interference, and further reducing an impact on a utilization rate of a frequency domain resource.

**BRIEF DESCRIPTION OF THE DRAWINGS**

FIG. 1 is a block diagram of an applicable wireless communication system according to an embodiment of this application;

FIG. 2 is a schematic diagram of signal sending using OFDM in the related art;

FIG. 3 is a schematic diagram of a $\cos(2\pi kt/T_{FFT})$ waveform signal of a time signal on a $k^{th}$ sub-carrier sent by OFDM in a scenario where phases of adjacent OFDM symbols are non-continuous;

FIG. 4 is a schematic diagram of a waveform $\cos(2\pi kt/T_{FFT})$ signal of a $k^{th}$ sub-carrier signal sent by OFDM in a scenario where phases of adjacent OFDM symbols are continuous;

FIG. 5 is a flowchart of a signal transmission method according to an embodiment of this application;

FIG. 6 is a schematic diagram of sub-carrier signal phases of adjacent OFDM symbols in the related art;

FIG. 7 is a schematic diagram of sub-carrier signal phases of adjacent OFDM symbols according to an embodiment of this application;

FIG. 8 is a schematic diagram of OFDM signals modulated in units of time domain resource blocks on different sub-carriers according to an embodiment of this application;

FIG. 9 is a schematic diagram of frequency domain waveforms of OFDM signals modulated in units of time domain resource blocks on different sub-carriers according to an embodiment of this application;

FIG. 10 is a schematic diagram of a communication resource block and a sensing resource block according to an embodiment of this application;

FIG. 11 is a flowchart of another signal transmission method according to an embodiment of this application;

FIG. 12 is a schematic diagram of another communication resource block and another sensing resource block according to an embodiment of this application;

FIG. 13 is a schematic diagram of a communication frequency domain signal and a sensing frequency domain signal according to an embodiment of this application;

FIG. 14 is a diagram of a structure of a signal transmission apparatus according to an embodiment of this application;

FIG. 15 is a diagram of a structure of another signal transmission apparatus according to an embodiment of this application;

FIG. 16 is a diagram of a structure of a communication device according to an embodiment of this application;

FIG. 17 is a diagram of a structure of a signal sending device according to an embodiment of this application; and

FIG. 18 is a diagram of a structure of a signal receiving device according to an embodiment of this application.

**DETAILED DESCRIPTION**

The technical solutions in embodiments of this application are clearly described in the following with reference to the accompanying drawings in the embodiments of this application. Apparently, the described embodiments are merely some rather than all of the embodiments of this application. Based on the embodiments of this application, all other embodiments obtained by a person of ordinary skill in the art fall within the protection scope of this application.

The terms "first", "second", and the like in this application are used to distinguish between similar objects, but are not necessarily used to describe a specific order or sequence. It will be appreciated that the terms used in this way are exchangeable in a proper case, so that the embodiments of this application can be implemented in an order different from the order shown or described herein, and objects distinguished by "first" and "second" are usually of the same category and the number of the objects is not defined. For example, there may be one or more first objects. In addition, "or" in this application represents at least one of connected objects. For example, "A or B" covers three solutions, namely, solution 1: including A and excluding B; solution 2: including B and excluding A; and solution 3: including both A and B. The character "/" generally indicates an "or" relationship between the associated objects.

The term "indication" in this application may be a direct indication (or an explicit indication), or may be an indirect indication (or an implicit indication). The direct indication may be understood as that a sending party explicitly notifies a receiving party of content such as specific information, an operation to be performed, or a request result in an indication sent by the sending party. The indirect indication may be understood as that the receiving party determines corresponding information according to an indication sent by the sending party, or performs determining and determines an operation to be performed or a request result according to a determining result.

It should be noted that the technology described in embodiments of this application is not limited to a long term evolution (Long Term Evolution, LTE)/LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of this application are usually interchangeably used, and the technologies described may be applied to the systems and radio technologies mentioned above, and may further be applied to other systems and radio technologies. The following description describes a new radio (New Radio, NR) system for an example purpose, and an NR term is used in most of the following description. However, those technologies may further be applied to an application other than an NR system application, such as a 6th Generation (6th Generation, 6G) communication system.

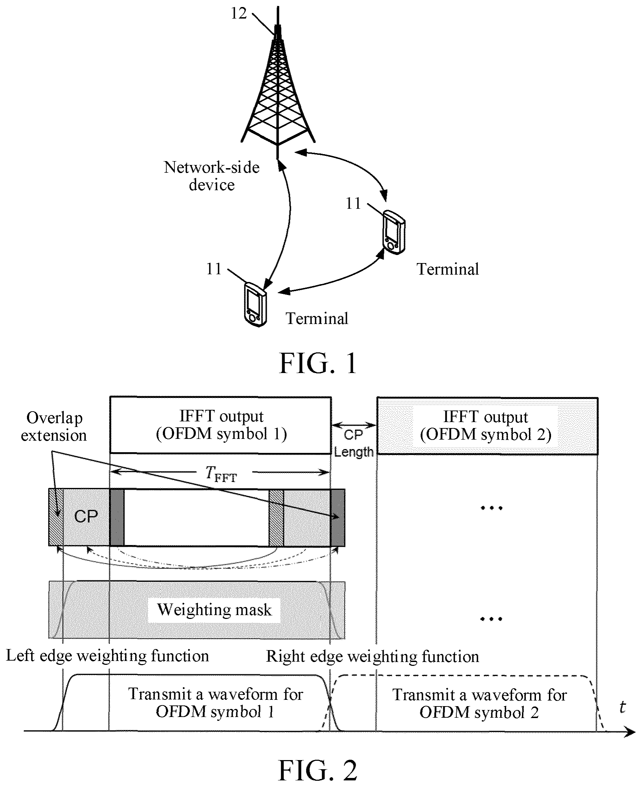

FIG. 1 shows a block diagram of an applicable wireless communication system according to an embodiment of this application. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (Augmented Reality, AR)/virtual reality (Virtual Reality, VR) device, a robot, a wearable device (Wearable Device, WD), a flight vehicle (flight vehicle), vehicle user equipment (Vehicle User Equipment, VUE), ship-borne equipment, pedestrian terminal (Pedestrian User Equipment, PUE), a smart home appliance (home equipments with a wireless communication function, such as a refrigerator, a TV, a washing machine or a furniture), and terminal side equipments such as a game console, a personal computer (Personal Computer, PC), an ATM or a self-service machine, or another terminal-side device. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wrist strap, a smart dress, and the like. The vehicle user equipment may alternatively be referred to as a vehicle terminal, a vehicle controller, a vehicle module, a vehicle component, a vehicle chip, a vehicle unit, or the like. It should be noted that this embodiment of this application does not limit a particular type of the terminal 11. The network-side device 12 may include an access network device or a core network device. The access network device may alternatively be referred to as a radio access network (Radio Access Network, RAN) device, a radio access network function, or a radio access network element. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another appropriate term in the art. As long as the same technical effects are achieved, the base station is not limited to a specific technology vocabulary. It should be noted that, the base station in the NR system is used only as an example for description in this embodiment of this application, but a particular type of the base station is not limited.

To facilitate understanding, some content related to this embodiment of this application are described below.

1. Integrated sensing and communication

Currently, a scenario of integrated sensing and communication expected to be implemented by performing technological upgrade according to the architecture of a 5G communication system is shown in Table 1.

Table 1 Typical scenario of integrated sensing and communication

| Wireless sensing categories | Sensing functions | Application scenarios |
|---|---|---|
| Large-scale macro sensing category | Weather, air quality, and the like | Meteorology, agriculture, and living services |
| | Vehicle flow (intersection) and pedestrian flow (subway entrance) | Smart city, intelligent transportation, and commercial service |
| | Animal movement, migration, and the like | Animal husbandry, ecological environmental protection, and the like |
| | Target tracking, ranging, speed measurement, outline, and the like | Numerous application scenarios of conventional radar |
| | Three-dimensional map construction | Intelligent driving, navigation, and smart city |
| Short-range refined sensing | Action posture recognition | Smart interaction, game, and smart home of smartphone |
| | Heartbeat, breathing, and the like | Health and medical care |
| | Imaging, material detection, and the like | Security inspection, industry, and the like |

2. Method for reducing out of band (Out of Band, OOB) related to orthogonal frequency division multiplexing (Orthogonal Frequency Division Multiplexing, OFDM)

As shown in FIG. 2, an OFDM system has the following features:
To combat channel multipath, a cyclic prefix (Cyclic Prefix, CP) is placed at a tip of each OFDM symbol.

To maintain the orthogonality between OFDM sub-carriers, a rectangular pulse (Rectangular Pulse) is placed on each OFDM symbol.

To reduce signal OOB, namely, side-lobe leakage of a signal spectrum, weighting masks (Weighting Mask) are placed at both ends of each OFDM symbol, and an overlap extension (Overlap Extension) part is set. The overlap extension may alternatively be referred to as overlap extending. The weighting mask and the overlapping extension part are combined into a weighted overlap and add (Weighted Overlap and Add, WOLA), which has a soft transition at the start and end of the OFDM symbol, so that a non-continuous-phase signal becomes a continuous-phase signal. However, some inter-sub-carrier interference, namely, inter-carrier interference (Inter-Carrier Interference, ICI), is also caused.

Due to placement of the weighting mask, the orthogonality of some sub-carriers at both ends of an OFDM spectrum used is destroyed, and therefore the sub-carriers cannot be used as normal sub-carrier resources. Therefore, a certain number of zero signals (i.e., Zero-adding) need to be placed at both ends of the spectrum.

Specifically, a weighting mask function, $p_T(t)$, is obtained by convolving a rectangular pulse function $\Pi(t)$ and a weighting function h(t), and is defined as:

$$p_T\left(t\right) = \Pi\left(\frac{t - T/2}{T}\right) \star h\left(t\right)$$

where * is a convolution symbol, and h(t) is a broadband filter pulse having an interval of $2T_0$, which is defined as:

$$h\left(t\right) = \begin{cases} h_L\left(t\right) + h_R\left(t\right) & , \left|t\right| \leq T_0 \\ 0 & , \text{Otherwise} \end{cases}$$

where $h_L(t)$ and $h_R(t)$ are respectively a left edge weighting function (Left Edge Weighting Function) and a right edge weighting function (Right Edge Weighting Function), and $T_0$ is a time width of the left edge weighting function and the right edge weighting function.

It should be noted that a time length of $T_0/2$ may be set to an overlap extension length. A period T of the OFDM symbol is far greater than $T_0$, namely, $T \gg T_0$.

A CP and a Zero-adding signal need to be placed in the OFDM system. Consequently, a spectrum efficiency loss is caused.

The side-lobe leakage of the signal spectrum is mainly caused by phase non-continuity of a transmission signal, and a combination of the weighting mask and the overlap extension part may change a non-continuous signal phase to a continuous signal phase.

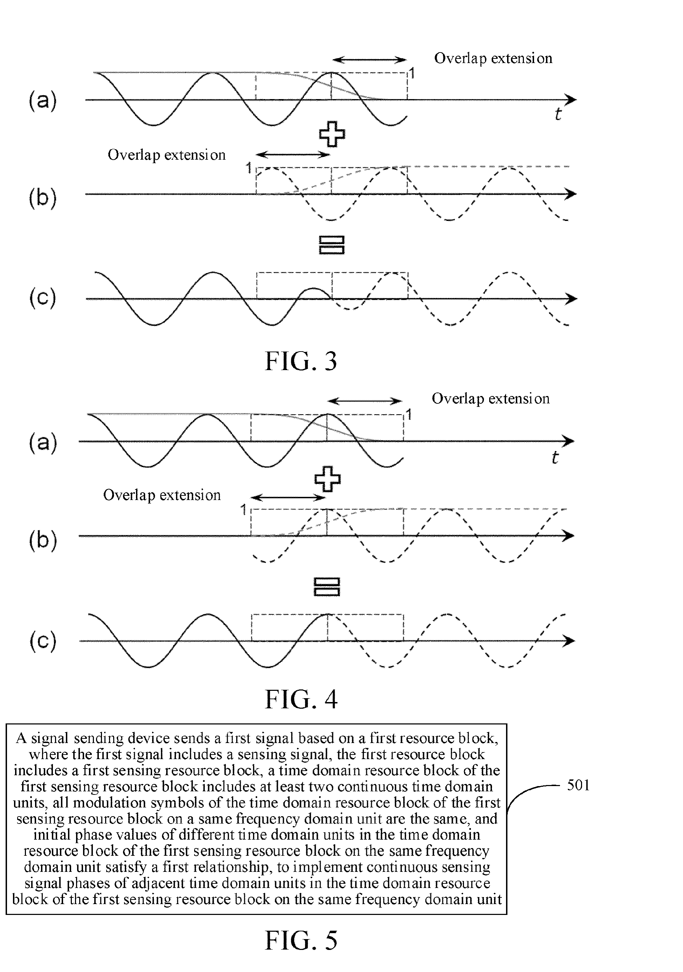

FIG. 3 is a schematic diagram of a $\cos(2\pi kt/T_{FFT})$ waveform signal of a time signal on a $k^{th}$ sub-carrier sent by OFDM in a scenario where phases of adjacent OFDM symbols are non-continuous. It should be noted that for simplicity, a $\sin(2\pi kt/T_{FFT})$ waveform signal is not shown in a $k^{th}$ sub-carrier signal shown in FIG. 3.

Part (a) shown in FIG. 3 is a sending waveform of OFDM symbol 1, and includes the $k^{th}$ sub-carrier signal, the weighting mask, and the signal overlap extension part. It should be noted that for simplicity, a modulation symbol is binary phase shift keying (Binary Phase Shift Keying, BPK) on OFDM symbol 1, and the modulation symbol is 1 herein.

Part (b) shown in FIG. 3 is a sending waveform of OFDM symbol 2, and includes the $k^{th}$ sub-carrier signal, the weighting mask, and the signal overlap extension part. It should be noted that for simplicity, a modulation symbol is also BPSK on OFDM symbol 2, and the modulation symbol is -1 herein.

Part (c) shown in FIG. 3 is a $k^{th}$ sub-carrier signal waveform obtained after OFDM symbol 1 and OFDM symbol 2 are superposed. It should be noted that by means of the weighting mask and the signal overlap extension, a signal phase between two symbols changes from a non-continuous signal to a continuous signal. However, interference, namely ICI, is generated between sub-carriers due to distortion of a signal waveform at an end of an OFDM symbol. Such signal waveform distortion is especially severe for sub-carriers at both ends of an OFDM spectrum.

FIG. 4 is a schematic diagram of a waveform $\cos(2\pi kt/T_{FFT})$ signal of a $k^{th}$ sub-carrier signal sent by OFDM in a scenario where phases of adjacent OFDM symbols are continuous. It should be noted that for simplicity, a $\sin(2\pi kt/T_{FFT})$ waveform signal is not shown in a $k^{th}$ sub-carrier signal shown in FIG. 4.

Part (a) shown in FIG. 4 is a sending waveform of OFDM symbol 1, and includes the $k^{th}$ sub-carrier signal, the weighting mask, and the signal overlap extension part. It should be noted that for simplicity, a modulation symbol is BPSK on OFDM symbol 1, and the modulation symbol is 1 herein.

Part (b) shown in FIG. 4 is a sending waveform of OFDM symbol 2, and includes the $k^{th}$ sub-carrier signal, the weighting mask, and the signal overlap extension part. It should be noted that for simplicity, a modulation symbol is also BPSK on OFDM symbol 2, and the modulation symbol is 1 herein.

Part (c) shown in FIG. 4 is a $k^{th}$ sub-carrier signal waveform obtained after OFDM symbol 1 and OFDM symbol 2 are superposed. It should be noted that because both the modulation symbols sent by OFDM symbol 1 and OFDM symbol 2 are 1, phases between the two symbols are continuous. By means of the weighting mask and the signal overlap extension, continuous phases of the two symbols originally still remain continuous. Therefore, in this case, the signal waveform at the end of the OFDM symbol is not distorted, and no interference is generated between sub-carriers.

It can be known based on the foregoing discussion that, if modulation symbols of adjacent OFDM symbols are different, by means of the weighting mask and the signal overlap extension, a signal phase between two symbols changes from a non-continuous signal to a continuous signal, but some interference is still generated between sub-carriers. If the modulation symbols of the adjacent OFDM symbols are the same, the weighting mask and the signal overlap extension do not change the phases of the OFDM symbols, and the sub-carriers do not interfere with each other.

A signal transmission method according to an embodiment of this application is described in detail below with reference to the accompanying drawings through some embodiments and application scenarios thereof.

Refer to FIG. 5. FIG. 5 is a flowchart of a signal transmission method according to an embodiment of this application. The method may be performed by a signal sending device. The signal sending device may be a terminal or a network-side device.

As shown in FIG. 5, the signal transmission method according to this embodiment of this application includes the following steps:

Step 501: A signal sending device sends a first signal based on a first resource block.

The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

In this embodiment, the foregoing sensing signal may be understood as a signal for sensing a related service. The first sensing resource block may be understood as a resource block for sensing signal transmission. The resource block may include a time domain resource block and a frequency domain resource block. The time domain resource block may include at least one time domain unit. The frequency domain resource block may include at least one frequency domain unit. The time domain unit may include, but is not limited to, an OFDM symbol. The frequency domain unit may include, but is not limited to, a sub-carrier.

The time domain resource block of the first sensing resource block includes at least two continuous time domain units. For example, the time domain resource block of the first sensing resource block may include at least two continuous OFDM symbols. The frequency domain resource block of the first sensing resource block may include at least one frequency domain unit. For example, the frequency domain resource block of the first sensing resource block may include at least one sub-carrier. It may be understood that, the first sensing resource block may include one or more sensing resource blocks. In a case that the first sensing resource block includes a plurality of sensing resource blocks, a time domain resource block of each sensing resource block may include at least two continuous time domain units. Time domain resource blocks of different sensing resource blocks may have same or different quantities of time domain units. Alternatively, some sensing resource blocks have the same quantity of time domain units, and some sensing resource blocks have different quantities of time domain units. This is not limited in this embodiment.

All modulation symbols of the time domain resource blocks of the first sensing resource block on a same frequency domain unit are the same, where the modulation symbol is a modulated sensing symbol. Specifically, the foregoing modulation symbol may be a quadrature phase-shift keying (Quadrature Phase-Shift Keying, QPK) symbol, a BPSK symbol, or the like. For example, the foregoing time domain resource block includes OFDM symbol 1 and OFDM symbol 2. Modulation symbols of OFDM symbol 1 and OFDM symbol 2 on a same sub-carrier are the same. For example, the modulation symbols of OFDM symbol 1 and OFDM symbol 2 on the same sub-carrier are both 1.

It should be noted that because the sensing signal has a deterministic (Deterministic) feature, to be specific, the sensing signal does not need to transmit any information, the modulation symbols may be kept consistent in the sensing time domain resource block. To be specific, it may be set that all modulation symbols in the time domain resource block of the first sensing resource block on a same frequency domain unit are the same. In this way, it is beneficial to ensure phase continuity of a signal on the same frequency domain unit by adjacent time domain units in the time domain resource block. It should be further noted that modulation symbols of different time domain resource blocks on a same frequency domain unit may be the same or different. This is not limited in this embodiment.

Based on the fact that all modulation symbols of the time domain resource block of the first sensing resource block on a same frequency domain unit are the same, by properly setting initial phase values of different time domain units in the time domain resource block of the first sensing resource block on the same frequency domain unit, phases of signals of adjacent time domain units in the time domain resource block on the same frequency domain unit may be continuous. In this case, it may further be ensured that a waveform of a signal of adjacent time domain units in the time domain resource block on the same frequency domain unit is not distorted.

Descriptions are provided below by using an example in which the time domain unit is an OFDM symbol and the frequency domain unit is a sub-carrier.

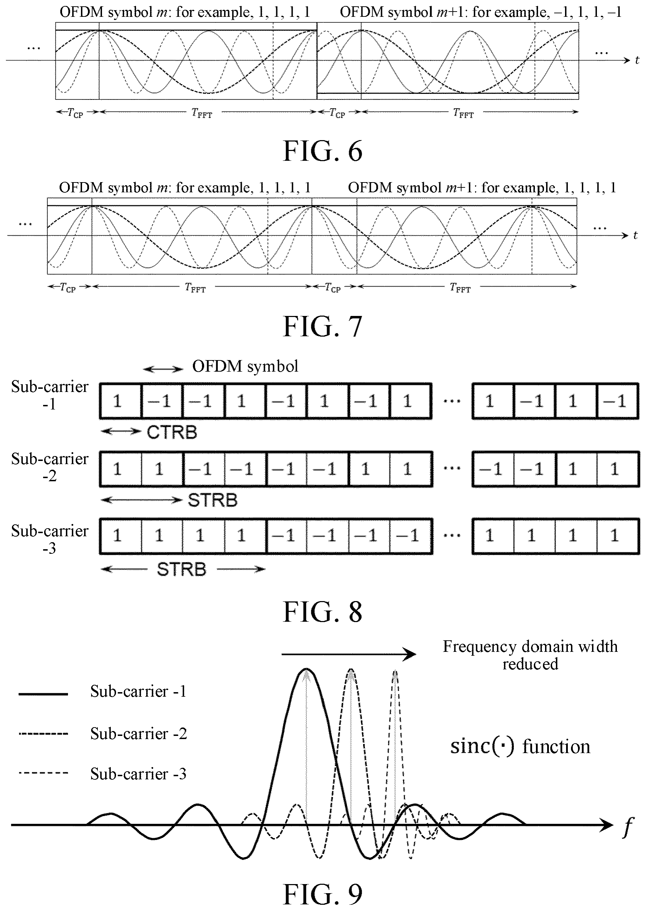

FIG. 6 is a schematic diagram of sub-carrier signal phases of adjacent OFDM symbols in the related art. For simplicity, the quantity of sub-carriers is 4, and an example in which a $\cos(2\pi kt/T_{FFT})$ signal is only displayed is used for description. As shown in FIG. 6, due to insertion of the CP part, no matter what type of modulation symbol (for example, a QPSK symbol or a quadrature amplitude modulation (Quadrature Amplitude Modulation, QAM) symbol) is sent, phases of a same sub-carrier signal cannot be continuous between adjacent OFDM symbols. To be specific, the phases are non-continuous.

FIG. 7 is a schematic diagram of sub-carrier signal phases of adjacent OFDM symbols according to an embodiment of this application. A generation manner of an OFDM signal with continuous phases provided in this embodiment of this application is different from a generation manner of an OFDM signal in the related art. Specifically, in this embodiment of this application, time domain resource blocks are disposed. As shown in FIG. 7, each time domain resource block has a length of two OFDM symbols, all modulation symbols of the OFDM symbols of a same time domain resource block on the same sub-carrier are set to be the same, and initial phases of the OFDM symbols in the same time domain resource block on the same sub-carrier are properly set, so that sensing signal phases of adjacent time domain units in the same time domain resource block on a same frequency domain unit are continuous. As shown in FIG. 7, although a CP is also placed on each of the OFDM symbols, the phases of the same sub-carrier signal in adjacent OFDM symbols in the time domain resource block are continuous and the waveform is not distorted. In addition, an initial phase of the same sub-carrier signal is different in each OFDM symbol.

By using the signal transmission method according to this embodiment of this application, a signal sending device sends a first signal based on a first resource block. The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit. In this application, based on the fact that the sensing signal has a deterministic feature, all modulation symbols of the time domain resource blocks on the same frequency domain unit are set to be the same, and the initial phase values of different time domain units in the time domain resource block on the same frequency domain unit are adjusted to ensure that sensing signal phases of adjacent time domain units in the time domain resource block of the first sensing resource block on the same frequency domain unit are continuous. This manner not only may reduce side-lobe leakage of a signal spectrum, but also may ensure that no waveform distortion is generated on the sensing signal, thereby avoiding inter-carrier interference, and further reducing an impact on a utilization rate of a frequency domain resource.

Optionally, the first sensing resource block includes at least one of a second sensing resource block and a third sensing resource block. The second sensing resource block includes $S_1$ sensing resource blocks. Frequency domain resource blocks of the $S_1$ sensing resource blocks are all located within a first frequency domain range of a band. The first frequency domain range is a frequency domain range defined by a first frequency domain unit of the band and an $R_1^{th}$ frequency domain unit of the band. The third sensing resource block includes $S_2$ sensing resource blocks. Frequency domain resource blocks of the $S_2$ sensing resource blocks are all located within a second frequency domain range of the band. The second frequency domain range is a frequency domain range defined by an $R_2^{th}$ frequency domain unit of the band and an $N^{th}$ frequency domain unit of the band.

N is a quantity of frequency domain units within the band. $R_1$ is greater than or equal to 1 and is less than or equal to N. $R_2$ is greater than or equal to 1 and is less than or equal to N. $R_1+R_2$ is less than or equal to N. $S_1$ is an integer greater than or equal to 1. $S_2$ is an integer greater than or equal to 1.

The frequency domain resource block may include at least one frequency domain unit of a band. The band is a band for transmission of the first signal.

That the first frequency domain range is a frequency domain range defined by a first frequency domain unit of the band and an $R_1^{th}$ frequency domain unit of the band may be understood as that the first frequency domain range includes all frequency domain units between the first frequency domain unit of the band and the $R_1^{th}$ frequency domain unit of the band, and includes the first frequency domain unit of the band and the $R_1^{th}$ frequency domain unit of the band. To be specific, the first frequency domain range is: [First frequency domain unit of the band, $R_1^{th}$ frequency domain unit of the band].

That the second frequency domain range is a frequency domain range defined by an $R_2^{th}$ frequency domain unit of the band and an $N^{th}$ frequency domain unit of the band may be understood as that the second frequency domain range includes all frequency domain units between the $R_2^{th}$ frequency domain unit of the band and the $N^{th}$ frequency domain unit of the band, and includes the $R_2^{th}$ frequency domain unit of the band and the $N^{th}$ frequency domain unit of the band. To be specific, the second frequency domain range is: [$R_2^{th}$ frequency domain unit of the band, $N^{th}$ frequency domain unit of the band].

In an implementation, the first sensing resource block may include a second sensing resource block. The second sensing resource block includes $S_1$ sensing resource blocks. Frequency domain resource blocks of the $S_1$ sensing resource blocks are all located within the first frequency domain range, where $R_1$ is greater than or equal to 1 and is less than or equal to N. In this case, the frequency domain resource blocks of the $S_1$ sensing resource blocks may include a sub-carrier at any location of the band.

In another implementation, the first sensing resource block includes a third sensing resource block. The third sensing resource block includes $S_2$ sensing resource blocks. Frequency domain resource blocks of the $S_2$ sensing resource blocks are all located within the second frequency domain range, where $R_2$ is greater than or equal to 1 and is less than or equal to N. In this case, the frequency domain resource blocks of the $S_2$ sensing resource blocks may include a sub-carrier at any location of the band.

In still another implementation, the first sensing resource block includes a second sensing resource block and a third sensing resource block. The second sensing resource block includes $S_1$ sensing resource blocks. The third sensing resource block includes $S_2$ sensing resource blocks. Frequency domain resource blocks of the $S_1$ sensing resource blocks are all located within the first frequency domain range. Frequency domain resource blocks of the $S_2$ sensing resource blocks are all located within the second frequency domain range. In this case, optionally, $R_1$ may be an integer greater than or equal to 1 and less than or equal to a round value of N/2. $R_2$ may be an integer greater than a round value of N/2 and less than or equal to N. To be specific, the frequency domain resource blocks of the $S_1$ sensing resource blocks are located close to the first frequency domain unit of the band, and the frequency domain resource blocks of the $S_2$ sensing resource blocks are located close to the $N^{th}$ frequency domain unit of the band in the band.

Optionally, for a sensing resource block, among the $S_1$ sensing resource blocks, in which a frequency domain resource block is closest to the first frequency domain unit, a length of a time domain resource block is maximal. The length of the time domain resource block is a quantity of time domain units included in the time domain resource block.

For a sensing resource block, among the $S_2$ sensing resource blocks, in which a frequency domain resource block is closest to the $N^{th}$ frequency domain unit, a length of a time domain resource block is maximal.

Optionally, $R_1$ may be an integer greater than or equal to 1 and less than or equal to a round value of N/2, and $R_2$ may be an integer greater than a round value of N/2 and less than or equal to N.

The distance between the frequency domain resource block and the first frequency domain unit may be understood as a distance between a frequency domain unit of the frequency domain resource block and the first frequency domain unit of the band, such as a distance between a frequency domain unit at a lowest frequency domain location of the frequency domain resource block and the first frequency domain unit of the band, or a distance between a frequency domain unit at a highest frequency domain location of the frequency domain resource block and the first frequency domain unit of the band.

The distance between the frequency domain resource block and the $N^{th}$ frequency domain unit may be understood as a distance between a frequency domain unit of the frequency domain resource block and the $N^{th}$ frequency domain unit of the band, for example, a distance between a frequency domain unit at a lowest frequency domain location of the frequency domain resource block and the $N^{th}$ frequency domain unit of the band, or a distance between a frequency domain unit at a highest frequency domain location of the frequency domain resource block and the $N^{th}$ frequency domain unit of the band.

It should be noted that in a case that a frequency domain resource block in the $S_1$ sensing resource blocks includes the first frequency domain unit of the band, a length of a time domain resource block corresponding to the frequency domain resource block (i.e., the frequency domain resource block including the first frequency domain unit) is maximal. in a case that a frequency domain resource block in the $S_2$ sensing resource blocks includes the $N^{th}$ frequency domain unit of the band, a length of a time domain resource block corresponding to the frequency domain resource block (i.e., the frequency domain resource block including the $N^{th}$ frequency domain unit) is maximal.

It should be further noted that a length of a time domain resource block in this embodiment is inversely proportional to a frequency domain bandwidth occupied by a corresponding frequency domain unit. For example, FIG. 8 shows OFDM signals modulated in units of time domain resource blocks on different sub-carriers. Lengths of the time domain resource blocks formed by the sub-carrier -1, sub-carrier -2, and sub-carrier -3 are respectively 1, 2, and 4 OFDM symbols. To be specific, M=1, 2, and 4. Optionally, the modulation symbols use a BPSK modulation manner. To be specific, $C_{l,k}$ = 1 or -1. It may be seen from FIG. 8 that, the sent modulation symbols, $C_{l,k}$, are the same in a same time domain resource block, but the modulation symbols in different time domain resource blocks may be inconsistent. It should be noted that because the sensing signal has a deterministic (Deterministic) feature, sensing modulation symbols may remain consistent in the time domain resource block. However, communication signals (i.e., data signals) are different because modulation symbols of data have a random (Random) feature. If a time domain resource block in which M is greater than 1 is used for transmitting the modulation symbols of the data, the transmission efficiency is greatly reduced. However, in a case that M is equal to 1, signal phases of the time domain resource block formed by the individual OFDM symbols are non-continuous. Therefore, the time domain resource block in which M is equal to 1 is mainly used for transmitting communication data.

Specifically, the time domain resource block formed by sub-carrier -1 in FIG. 8 may be used for communication data transmission, and the time domain resource block formed by sub-carrier -2 and sub-carrier -3 may be used for sensing measurement. Because the modulation symbols of the sensing signal in the time domain resource block remain consistent, sensing signal phases of adjacent OFDM symbols in a same time domain resource block may be continuously maintained, but an initial phase of each OFDM symbol is different. It should be noted that the time domain resource block for sensing signal transmission may be referred to as a sensing time domain resource block (Sensing Time Resource Block, STRB). The time domain resource block for communication signal transmission may be referred to as a communication time domain resource block (Communication Time Resource Block, CTRB).

FIG. 9 shows frequency domain signals in different sub-carriers, which are represented by using a sinc($\cdot$) function. Although the sizes of the configured time domain resource blocks are different, spacing between sub-carriers occupied in the band is constant and is inversely proportional to a discrete Fourier transform (Discrete Fourier Transform, DFT) length, namely, $1/T_{FFT}$. However, frequency domain bandwidths of symbols transmitted on each sub-carrier are different, and are inversely proportional to time domain resource block lengths. As shown in FIG. 9, the length of the time domain resource block of sub-carrier -2 is twice the length of the time domain resource block of sub-carrier -1. Therefore, a symbol frequency domain bandwidth occupied by sub-carrier -2 is a half of a symbol frequency domain bandwidth occupied by carrier -1. Similarly, the length of the time domain resource block of sub-carrier -3 is 4 times the length of the time domain resource block of sub-carrier -1. Therefore, a symbol frequency domain bandwidth occupied by sub-carrier -3 is one fourth of a symbol frequency domain bandwidth occupied by carrier -1.

Therefore, by disposing a long time domain resource block, a frequency domain bandwidth of an OFDM symbol on a sub-carrier can be reduced, and a frequency domain side-lobe of a signal can be narrowed, thereby alleviating a problem of spectrum side-lobe leakage. Furthermore, when the length of the time domain resource block is infinite, a frequency domain signal on a sub-carrier becomes a pulse response signal, and the frequency domain side-lobe of the signal become zero. To be specific, there is no problem of spectrum side-lobe leakage.

In this embodiment of this application, for a sensing resource block, among the $S_1$ sensing resource blocks, in which a frequency domain resource block is closest to the first frequency domain unit, a length of a time domain resource block is maximal. For a sensing resource block, among the $S_2$ sensing resource blocks, in which a frequency domain resource block is closest to the $N^{th}$ frequency domain unit, a length of a time domain resource block is maximal. To be specific, a length of a time domain resource block closest to a band edge location is set to be maximal. In this way, the spectrum side-lobe leakage can be effectively reduced.

In some optional embodiments, for a sensing resource block, among the $S_1$ sensing resource blocks, in which a frequency domain resource block is closest to a frequency domain unit in the middle of the band, a length of a time domain resource block may be set to be minimal, which helps to improve signal transmission efficiency.

Optionally, a length of a time domain resource block of an $i^{th}$ sensing resource block among the $S_1$ sensing resource blocks is less than a length of a time domain resource block of an $(i+1)^{th}$ sensing resource block among the $S_1$ sensing resource blocks. A distance between a frequency domain resource block of the $i^{th}$ sensing resource block and the first frequency domain unit is greater than a distance between a frequency domain resource block of the $(i+1)^{th}$ sensing resource block and the first frequency domain unit, where a value range of i is [1, $S_1$].

A length of a time domain resource block of a $j^{th}$ sensing resource block among the $S_2$ sensing resource blocks is less than a length of a time domain resource block of a $(j+1)^{th}$ sensing resource block among the $S_2$ sensing resource blocks. A distance between a frequency domain resource block of the $j^{th}$ sensing resource block and the $N^{th}$ frequency domain unit is greater than a distance between a frequency domain resource block of the $(j+1)^{th}$ sensing resource block and the $N^{th}$ frequency domain unit, where a value range of j is [1, $S_2$].

Optionally, $R_1$ may be an integer greater than or equal to 1 and less than or equal to a round value of N/2, and $R_2$ may be an integer greater than a round value of N/2 and less than or equal to N.

In this embodiment of this application, a length of a time domain resource block closer to a band edge location is set to be greater, and a length of a time domain resource block closer to a band middle location is set to be smaller, so that signal transmission efficiency can be improved while the spectrum side-lobe leakage is reduced.

Optionally, a first resource parameter is configured by a first configuration signaling. The first resource parameter includes at least one of the following: $S_1$, $S_2$, a length of a time domain resource block of each sensing resource block among the $S_1$ sensing resource blocks, a length of a frequency domain resource block of each sensing resource block among the $S_1$ sensing resource blocks, a length of a time domain resource block of each sensing resource block among the $S_2$ sensing resource blocks, and a length of a frequency domain resource block of each sensing resource block among the $S_2$ sensing resource blocks.

The length of the time domain resource block is a quantity of time domain units included in the time domain resource block. The length of the frequency domain resource block is a quantity of frequency domain units included in the time domain resource block.

The first configuration signaling may include, but is not limited to, at least one of a physical downlink control channel (Physical Downlink Control Channel, PDCCH), a physical uplink control channel (Physical Uplink Control Channel, PUCCH), a media access control control element (Media Access Control Control Element, MAC CE) signaling, a radio resource control (Radio Resource Control, RRC) signaling, and the like.

Optionally, the first signal further includes a communication signal. The first resource block further includes a communication resource block. A frequency domain resource block of the communication resource block is located within a third frequency domain range. The third frequency domain range is a frequency domain range defined by an $(R_1+1)^{th}$ frequency domain unit of the band and an $(R_2-1)^{th}$ frequency domain unit of the band.

That the third frequency domain range is a frequency domain range defined by an $(R_1+1)^{th}$ frequency domain unit of the band and an $(R_2-1)^{th}$ frequency domain unit of the band may be understood as that the third frequency domain range includes all frequency domain units between the $(R_1+1)^{th}$ frequency domain unit of the band and the $(R_2-1)^{th}$ frequency domain unit of the band, and includes the $(R_1+1)^{th}$ frequency domain unit of the band and the $(R_2-1)^{th}$ frequency domain unit of the band. To be specific, the third frequency domain range is: [$(R_1+1)^{th}$ frequency domain unit of the band, $(R_2-1)^{th}$ frequency domain unit of the band].

In some optional embodiments, a frequency domain resource block of the second sensing resource block and a frequency domain resource block of the third sensing resource block may be respectively located at edge locations of both sides of the band. A frequency domain resource block of the communication resource block may be located at a middle location of the band. For example, the frequency domain resource blocks of the $S_1$ sensing resource blocks include a first frequency domain unit of the band to an $S_1^{th}$ frequency domain unit of the band. The frequency domain resource blocks of the $S_2$ sensing resource blocks include an $(N-S_2)^{th}$ frequency domain unit of the band to an $N^{th}$ frequency domain unit of the band. The frequency domain resource block of the communication resource block may include an $(S_1+1)^{th}$ frequency domain unit of the band to an $(N-S_2-1)^{th}$ frequency domain unit of the band.

Optionally, a time domain resource block of the communication resource block includes a time domain unit.

Using an example in which the time domain unit is an OFDM symbol, to ensure efficiency of communication data transmission, a length of a time domain resource block of the communication resource block is constant and is one OFDM symbol.

Optionally, a sum of a first value, a second value, and a third value is N. The first value is a sum of lengths of frequency domain resource blocks of all sensing resource blocks among the $S_1$ sensing resource blocks. The second value is a sum of lengths of frequency domain resource blocks of all sensing resource blocks among the $S_2$ sensing resource blocks. The third value is a length of the frequency domain resource block of the communication resource block.

In this embodiment, the sum of the first value, the second value, and the third value is *N*, which helps to improve a utilization rate of a frequency domain resource.

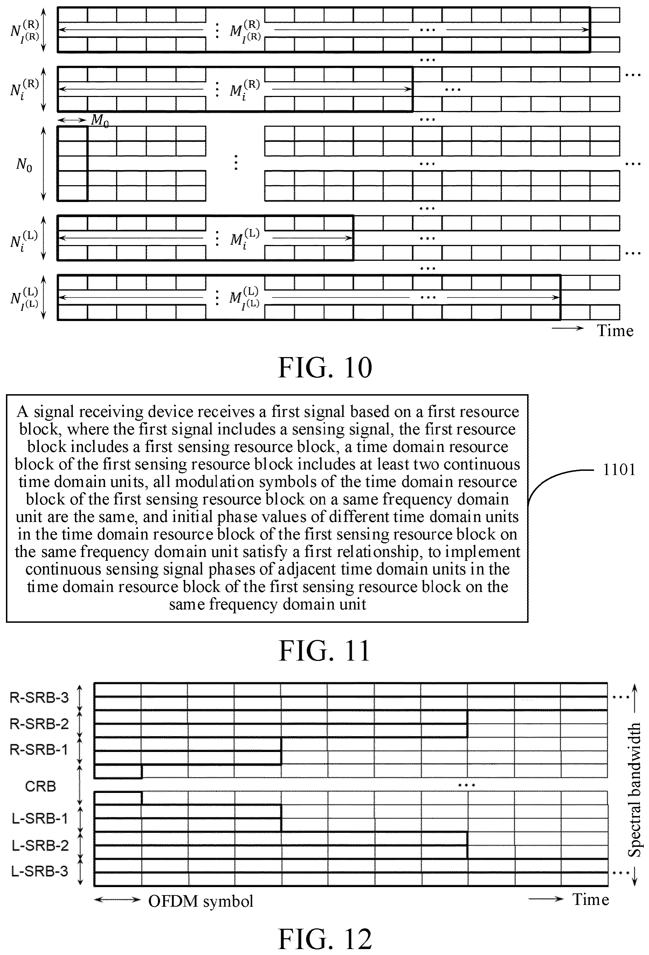

This embodiment of this application is described below by using examples with reference to FIG. 10.

Assuming that a total quantity of sub-carriers in a band is *N,* an integrated sensing and communication signal (i.e., the first signal) is sent in a form of an integrated sensing and communication resource block (i.e., the first resource block). The integrated sensing and communication resource block includes a communication resource block and a sensing resource block. Specifically, as shown in FIG. 10, the communication resource block (Communication Resource Block, CRB) is located in the middle of an entire band. The communication resource block includes a frequency domain resource block in a frequency domain direction and a time domain resource block in a time domain direction. The frequency domain resource block of the communication resource block may be referred to as a communication frequency domain resource block (Communication Frequency Resource Block, CFRB), and the time domain resource block of the communication resource block may be referred to as a communication time domain resource block (Communication Time Resource Block, CTRB). Specifically, the CFRB is formed by $N_0$ frequency domain resources in units of sub-carriers in the frequency domain direction, and the CTRB is formed by $M_0$ time domain resources in units of OFDM symbols in the time domain direction. It should be noted that to ensure efficiency of communication data transmission, a length of the communication time domain resource block in the time domain direction may be constant and is one OFDM symbol, namely $M_0 = 1$. Therefore, the communication resource block in the middle of the band occupies $N_0 \times 1$ sub-carriers.

Specifically, as shown in FIG. 10, sensing resource blocks (Sensing Resource Block, SRB) (i.e., the first sensing resource blocks) may be located at both sides of an entire band and include a sensing resource block located at a left side of the band (i.e., the second sensing resource block) and a sensing resource block located at a right side of the band (i.e., the third sensing resource block). It should be noted that the sensing resource block located at the left side of the band may be referred to as a left sensing resource block (Left Sensing Resource Block, L-SRB), and the sensing resource block located at the right side of the band may be referred to as a right sensing resource block (Right Sensing Resource Block, R-SRB).

$I^{(L)}$ sensing resource blocks may be disposed at the left side of the entire band. To be specific, the second sensing resource block may include $I^{(L)}$ sensing resource blocks. It may be understood that $I^{(L)}$ is equal to $S_1$. The sensing resource block located at the left side of the band may include a sensing frequency domain resource block in a frequency domain direction and a sensing time domain resource block in a time domain direction. The sensing frequency domain resource block located at the left side of the band may be referred to as a left sensing frequency domain resource block (Left Sensing Frequency Resource Block, L-SFRB), and may include $N_i^{(L)}$ frequency domain resources in units of sub-carriers in the frequency domain direction. The sensing time domain resource block located at the left side of the band may be referred to as a left sensing time domain resource block (Left Sensing Time Resource Block, L-STRB), and includes $M_i^{(L)}$ time domain resources in units of OFDM symbols in the time domain direction. Therefore, an $i^{th}$ sensing resource block located at the left side of the band occupy $N_i^{(L)} \times M_i^{(L)}$ sub-carriers.

$i = 1, 2, \cdots, I^{(L)}$, $I^{(L)} \in [0, N]$, $N_i^{(L)}$ and $M_i^{(L)}$ are integers, $N_i^{(L)} \in [0, N]$, $M_i^{(L)} \in [2, \infty)$. It is worth noting that $M_i^{(L)}$ generally satisfies a condition $M_i^{(L)} > M_{i-1}^{(L)}$.

$I^{(R)}$ sensing resource blocks may be disposed at the right side of the entire band. To be specific, the third sensing resource block may include $I^{(R)}$ sensing resource blocks. It may be understood that $I^{(R)}$ is equal to $S_2$. The sensing resource block located at the right side of the band may include a sensing frequency domain resource block in a frequency domain direction and a sensing time domain resource block in a time domain direction. The sensing frequency domain resource block located at the right side of the band may be referred to as a right sensing frequency domain resource block (Right Sensing Frequency Resource Block, R-SFRB), and includes $N_i^{(R)}$ frequency domain resources in units of sub-carriers in the frequency domain direction. The sensing time domain resource block located at the right side of the band may be referred to as a right sensing time domain resource block (Right Sensing Time Resource Block, R-STRB), and includes $M_i^{(R)}$ time domain resources in units of OFDM symbols in the time domain direction. Therefore, an $i^{th}$ sensing resource block located at the right side of the band occupy $N_i^{(R)} \times M_i^{(R)}$ sub-carriers.

$i = 1, 2, \cdots, I^{(R)}$, $I^{(R)} \in [0, N]$, $N_i^{(R)}$ and $M_i^{(R)}$ are integers, $N_i^{(R)} \in [0, N]$, $M_i^{(R)} \in [2, \infty)$. It should be noted that $M_i^{(R)}$ generally satisfies a condition $M_i^{(R)} > M_{i-1}^{(R)}$. It should be noted that the quantity of sub-carriers of the communication frequency domain resource block is $N_0$, the quantity of sub-carriers of the left sensing frequency domain resource block is $N_i^{(L)}$, and the quantity of sub-carriers of the right sensing frequency domain resource block is $N_i^{(R)}$. The following conditions need to be satisfied:

$$N_0 + \sum_{i=1}^{I^{(L)}} N_i^{(L)} + \sum_{i=1}^{I^{(R)}} N_i^{(R)} = N$$

To reduce spectrum side-lobe leakage, optionally, an SRB with a large sensing resource block index (Index) (which is also an SRB with a long time domain resource block) is placed near an edge location of an entire band, and an SRB with a small sensing resource block index (Index) (which is also an SRB with a short time domain resource block) is placed near a center location of the band. It should be noted that in a case that a standard protocol requirement of the OOB is satisfied, the SRB with the small sensing resource block index may alternatively be placed near the edge location of the entire band. Similarly, in a case that the standard protocol requirement of the OOB is satisfied, the SRB with the large sensing resource block index may alternatively be placed near the center location of the entire band.

It should be further noted that because the length of the sensing time domain resource block determines the degree of spectrum side-lobe leakage, generally, if synchronization of a sensing signal relies on a communication signal, only configuring a sensing time domain resource block of a large size (i.e., a sensing time domain resource block of a large length, for example, a sensing time domain resource block having a length greater than a preset length) does not cause a problem. However, if synchronization of the sensing signal does not rely on the communication signal, optionally, coherence detection on the sensing signal may be completed by using a matched filter (Matched Filter). In this case, it is essential to configure some small-sized sensing time domain resource blocks (i.e., sensing time domain resource blocks of a small length, for example, a sensing time domain resource block having a length less than or equal to a preset length) at least in $I^{(L)}$ and/or $I^{(R)}$ sensing resource blocks. Optionally, synchronization and coherent detection of the sensing signal may be implemented by configuring a time domain sensing signal format (i.e., Sensing Signal Pattern) of the small-sized sensing time domain resource block.

It should be further noted that in a conventional OFDM system, to resolve a problem of spectrum side-lobe leakage, weighting mask and symbol overlap extension need to be performed on each OFDM symbol. Although processing of the weighting mask and the symbol overlap extension may change a signal phase between two symbols from non-continuous to continuous, interference is generated between sub-carriers due to distortion of a signal waveform at an end of the OFDM symbol. Therefore, in the conventional OFDM system, a particular amount of zero-padding processing needs to be performed on both sides of an OFDM carrier, affecting use efficiency of a frequency domain resource. Because the sensing signal has a deterministic (Deterministic) feature and a frequency domain side-lobe may be reduced by setting a sensing time domain resource block of a particular length, in the integrated sensing and communication system provided in this embodiment of this application, a sub-carrier resource that needs to be zero-padded may be allocated to the sensing signal for use, thereby improving use efficiency of a frequency domain resource while ensuring that spectrum side-lobe leakage does not exceed a range specified in a standard protocol.

In conclusion, in this embodiment of this application, integrated sensing and communication signal transmission is implemented by configuring the communication resource block and the sensing resource block, so that flexibility of resource allocation can be increased, and spectrum side-lobe leakage can be reduced. Further, different patterns (Pattern) of a sensing signal are configured by using a sensing time domain resource block of a small size (i.e., a sensing time domain resource block of a small length), to facilitate sensing signal synchronization and improve sensing performance.

Optionally, the time domain unit is an orthogonal frequency division multiplexing OFDM symbol. The frequency domain unit is a sub-carrier.

A first relationship satisfied between an initial phase value $\varphi_{l,m,k}$ of a $k^{th}$ sub-carrier in an $m^{th}$ OFDM symbol of an $l^{th}$ time domain resource block of the first sensing resource block and an initial phase value $\varphi_{l,1,k}$ of a $k^{th}$ sub-carrier of a first OFDM symbol in the $l^{th}$ time domain resource block is:

$$\varphi_{l,m,k} = -\frac{2\pi k \left(m-1\right) T_m}{T_{\text{FFT},m}} + \varphi_{l,1,k} - \text{Formula 1}$$

where $T_{\text{FFT},m}$ represents a time length of a discrete Fourier transform DFT of the $m^{th}$ OFDM symbol, $T_m$ represents a period of the $m^{th}$ OFDM symbol, a value range of $l$ is [1, L], L is a quantity of time domain resource blocks of the first sensing resource block, a value range of m is [1, M], M is a quantity of OFDM symbols of the $l^{th}$ time domain resource block, a value range of k is [0, N-1], and N is a quantity of sub-carriers of the band.

Specifically, in a case that the foregoing formula 1 is satisfied between an initial phase value $\varphi_{l,m,k}$ of a $k^{th}$ sub-carrier in an $m^{th}$ OFDM symbol of an $l^{th}$ time domain resource block of the first sensing resource block and an initial phase value $\varphi_{l,1,k}$ of a $k^{th}$ sub-carrier of a first OFDM symbol in the $l^{th}$ time domain resource block, it may be ensured that sensing signal phases of adjacent time domain units in the time domain resource block of the first sensing resource block on a same frequency domain unit are continuous.

Optionally, the forgoing formula 1 satisfied between an initial phase value $\varphi_{l,m,k}$ of a $k^{th}$ sub-carrier in an $m^{th}$ OFDM symbol of an $l^{th}$ time domain resource block of the first sensing resource block and an initial phase value $\varphi_{l,1,k}$ of a $k^{th}$ sub-carrier of a first OFDM symbol in the $l^{th}$ time domain resource block may be agreed by a protocol. In this way, a signal receiving device may accurately acquire the initial phase of each OFDM symbol without any signaling, and perform sensing coherence detection.

It should be noted that for a sensing signal transmitted based on the sensing time domain resource block, as long as it is assumed that the sensing time domain resource blocks are completely synchronous, and the signal receiving device knows an initial phase of each OFDM symbol in the sensing time domain resource block in advance, a sensing target may be sensed by receiving the sensing signal. Therefore, to perform the coherent signal detection, the signal receiving device needs to know the initial phase value $\varphi_{l,1,k}$ of the sensing signal in each sensing time domain resource block. Optionally, the initial phase value $\varphi_{l,1,k}$ may be fixed in advance, and cannot be changed after being configured. Alternatively, the initial phase value $\varphi_{l,1,k}$ may be a dynamically determined phase value. For example, the initial phase value $\varphi_{l,1,k}$ of each sensing time domain resource block is dynamically determined depending on a clock parameter.

Optionally, the initial phase value of the $k^{th}$ sub-carrier of the first OFDM symbol in the $l^{th}$ time domain resource block of the first sensing resource block is a fixed phase value. Alternatively, the initial phase value of the $k^{th}$ sub-carrier of the first OFDM symbol in the $l^{th}$ time domain resource block of the first sensing resource block is a dynamically determined phase value.

In this embodiment, the initial phase value of the $k^{th}$ sub-carrier of the first OFDM symbol in the $l^{th}$ time domain resource block of the first sensing resource block is a fixed phase value. To be specific, in a sensing process, the initial phase value of the $k^{th}$ sub-carrier of the first OFDM symbol in the $l^{th}$ time domain resource block of the first sensing resource block does not change after being configured. The fixed phase value may be a phase value agreed by a protocol. For example, it is agreed by a protocol that $\varphi_{l,1,k} = 0$. Alternatively, the fixed phase value may be a phase value configured by a configuration signaling (for example, PDCCH, PDCCH, MAC CE signaling, or RRC signaling). It may be understood that, in this case, in a sensing process, a value of an initial phase $\varphi_{l,1,k}$ does not change with time.

The initial phase value of the $k^{th}$ sub-carrier of the first OFDM symbol in the $l^{th}$ time domain resource block of the first sensing resource block is a dynamically determined phase value. To be specific, in a sensing process, the initial phase value of the $k^{th}$ sub-carrier of the first OFDM symbol in the $l^{th}$ time domain resource block of the first sensing resource block may change. For example, in the sensing process, the initial phase value of the $k^{th}$ sub-carrier of the first OFDM symbol in the $l^{th}$ time domain resource block of the first sensing resource block may change with time.

Optionally, the initial phase value of the $k^{th}$ sub-carrier of the first OFDM symbol in the $l^{th}$ time domain resource block of the first sensing resource block is a phase value determined according to a clock parameter. Alternatively, the initial phase value of the $k^{th}$ sub-carrier of the first OFDM symbol in the $l^{th}$ time domain resource block of the first sensing resource block is a phase value determined according to a second configuration signaling.

In this embodiment, the clock parameter may include, but is not limited to, a global positioning system (Global Positioning System, GPS) clock, a time frame number (Frame Number, FN), a system frame number (System Frame Number, SFN), and the like.

In some optional embodiments, a calculation formula and a clock parameter for calculating the initial phase value of the $k^{th}$ sub-carrier of the first OFDM symbol in the $l^{th}$ time domain resource block of the first sensing resource block may be agreed by a protocol, and the initial phase value of the $k^{th}$ sub-carrier of the first OFDM symbol in the $l^{th}$ time domain resource block of the first sensing resource block may be calculated based on the calculation formula and the clock parameter. For example, the calculation formula may be:

$$\varphi_{l,1,k} = 2\pi \times \frac{(Nl + k + t_{\text{ref}}) \bmod 360}{360}$$

where $t_{\text{ref}}$ represents the clock parameter, and mod represents performing a modulo operation.

The second configuration signaling may include, but is not limited to, at least one of PDCCH, PDCCH, MAC CE signaling, and RRC signaling. For example, in the sensing process, the initial phase value of the $k^{th}$ sub-carrier of the first OFDM symbol in the $l^{th}$ time domain resource block of the first sensing resource block may be configured in real time by using the second configuration signaling. Alternatively, in the sensing process, the calculation formula and the clock parameter for calculating the initial phase value of the $k^{th}$ sub-carrier of the first OFDM symbol in the $l^{th}$ time domain resource block of the first sensing resource block may be configured by using the second configuration signaling.

In some optional embodiments, the signal sending device may notify, by using a third configuration signaling, the signal receiving device of the initial phase value of the $k^{th}$ sub-carrier of the first OFDM symbol in the $l^{th}$ time domain resource block of the first sensing resource block. The third configuration signaling may include, but is not limited to, at least one of PDCCH, PDCCH, MAC CE signaling, and RRC signaling.

It should be noted that in this embodiment of this application, in a case that CPs are inserted into the OFDM symbols of the time domain resource blocks of the first sensing resource block, the initial phases of the OFDM symbols are different. However, compared with this, for an OFDM sensing signal waveform in the related art, an initial phase of a $k^{th}$ sub-carrier in each OFDM symbol may be constant, and is represented as:

$$\varphi_k = -\frac{2\pi k T_{CP,m}}{T_{FFT}}$$

Optionally, an initial phase $\varphi_{l,1,k}$ of a $k^{th}$ sub-carrier in an $m^{th}$ OFDM symbol of the $l^{th}$ time domain resource block of the first sensing resource block may be set to: $\varphi_{l,1,k} = \varphi_k$.

It should be further noted that in a case that the length of the time domain resource block of the first sensing resource block is infinite, the initial phase $\varphi_{l,1,k}$ cannot be determined, and therefore, the initial phase needs to be dynamically determined by using another reference time. In addition, dynamically determining the initial phase $\varphi_{l,1,k}$ is equivalent to distinguishing sensing time domain resource blocks of a finite length. If the length of the time domain resource block in the first sensing resource block is sufficiently large, phases between adjacent time domain resource blocks in the first sensing resource block do not greatly affect the OOB.

Optionally, when an initial time of the $l^{th}$ time domain resource block of the first sensing resource block is t = 0, a sensing signal sent over the $k^{th}$ sub-carrier of the $m^{th}$ OFDM symbol of the $l^{th}$ time domain resource block of the first sensing resource block may be represented as:

$$x_{l,m,k}(t) = C_{l,k} e^{j\left(\frac{2\pi k(t-(m-1)T_m)}{T_{FFT,m}} + \varphi_{l,1,k}\right)}$$

where k = 0, 1, $\cdots$, N-1; m = 1, 2, $\cdots$, M, $T_m = T_{FFT,m} + T_{CP,m}$; $C_{l,k}$ is a sensing symbol of modulation, namely, a modulation symbol; $T_{CP,m}$ represents the length of a CP of the $m^{th}$ OFDM symbol, and $T_{FFT,m}$ represents a time length of a DFT of the $m^{th}$ OFDM symbol.

It should be noted that the length $T_{CP,m}$ of a CP in each OFDM symbol may be different, and sub-carrier spacing (Sub-carrier Spacing) may be different. Therefore, a period $T_m$ of the OFDM symbol may be changed, and is determined by the length $T_{CP,m}$ of the CP and the sub-carrier spacing. For a specific determination manner for the period $T_m$ of the OFDM symbol, refer to the related art. Details are not described herein.

It should be further noted that in the conventional OFDM system, the sub-carrier spacing depends on an FFT length $T_{FFT}$. However, a frequency domain bandwidth of each sub-carrier depends on the design of a modulation symbol.

Optionally, the time domain unit is an OFDM symbol. The frequency domain unit is a sub-carrier.

A first signal transmitted over an $m^{th}$ OFDM symbol of the first resource block is:

$$\text{Re}\left\{\sum_{k=0}^{N-1} x_{m',k}(t) \cdot e^{j2\pi f_0\left(t-(m'-1)T_{m'}-T_{CP,m'}\right)}\right\}$$

where Re represents taking a real part of a complex number, $\sum_{k=0}^{N-1} x_{m',k}(t)$ represents a baseband signal over the $m^{th}$ OFDM symbol of the first resource block, $T_{m'}$ represents a period of the $m^{th}$ OFDM symbol, $T_{CP,m'}$ represents a length of a cyclic prefix CP of the $m^{th}$ OFDM symbol, t represents a current time, $f_0$ represents a center frequency, N is a quantity of sub-carriers of the band, and $m'$ is a positive integer.

In this embodiment, after a baseband signal of the OFDM symbol is modulated by using a center frequency $f_0$, a phase of a corresponding signal needs to be adjusted again, and the adjusted signal (i.e., the first signal) may be shown in the foregoing formula. The foregoing $m^{th}$ OFDM symbol may include an OFDM symbol for transmission of a sensing signal, or may include an OFDM symbol for transmission of a communication signal.

It should be noted that if the sensing signal is modulated over the $k^{th}$ sub-carrier in the $m'^{th}$ OFDM symbol, $m'$ may be associated with $l$ and m. For example, $m' = M \times l + m$, where M is the length of the $l^{th}$ time domain resource block. It may be understood that the communication signal may be modulated over a sub-carrier other than the $k^{th}$ sub-carrier in the $m'^{th}$ OFDM symbol.

Optionally, the time domain unit is an OFDM symbol. A weighting mask function is set for each OFDM symbol in the time domain resource block of the first sensing resource block. A left edge weighting function and a right edge weighting function for generating the weighting mask function satisfy the following conditions:

$$h_L\left(t+\frac{T_0}{2}\right)+h_R\left(t-\frac{T_0}{2}\right)=\begin{cases}1 & ,\ |t|\le\dfrac{T_0}{2}\\ 0 & ,\ \text{Otherwise}\end{cases}$$

where $h_L\left(t+\dfrac{T_0}{2}\right)$ represents the left edge weighting function, $h_R\left(t-\dfrac{T_0}{2}\right)$ represents the right edge weighting function, and a time width of the left edge weighting function and a time width of the right edge weighting function are both $T_0$.

Referring to the foregoing discussion, the weighting mask and the overlapping extension part are combined into WOLA, which has a soft transition at the start and end of the OFDM symbol, so that a non-continuous-phase signal becomes a continuous-phase signal. After the weighting mask and the overlap extension are set, to avoid waveform distortion caused to the signal with continuous phases between the OFDM symbols, a left edge weighting function and a right edge weighting function for generating the weighting mask function need to satisfy the foregoing condition.

Optionally, a modulation symbol on a $q^{th}$ frequency domain unit of a $p^{th}$ time domain resource block of the first sensing resource block is a fixed sensing symbol. A value range of p is [1, L]. L is a quantity of time domain resource blocks of the first sensing resource block. A value range of q is [1, N-1]. N is a quantity of frequency domain units of the band. Alternatively,

a modulation symbol on a $q^{th}$ frequency domain unit of a $p^{th}$ time domain resource block of the first sensing resource block is a dynamically determined sensing symbol.

In this embodiment, in a case that the modulation symbol $C_{p,q}$ on the $q^{th}$ frequency domain unit of the $p^{th}$ time domain resource block of the first sensing resource block is a fixed sensing signal, fixed sensing symbols modulated on different frequency domain units of different time domain resource blocks may be the same. In this case, the modulation symbol $C_{p,q}$ is not associated with the time domain resource block and the frequency domain unit, and may be simplified as C. Optionally, the fixed sensing symbol may be a QPSK symbol, for example, $C_{p,q}=\dfrac{1}{\sqrt{2}}(1+j)$, where $j$ is an imaginary unit, satisfying an equation $j^2$ = -1. Alternatively, the fixed sensing symbol may be a BPSK symbol, for example, $C_{p,q}=1$.

In a case that the modulation symbol on the $q^{th}$ frequency domain unit of the $p^{th}$ time domain resource block of the first sensing resource block is a dynamically determined sensing symbol, the modulation symbol $C_{p,q}$ is associated with the $p^{th}$ time domain resource block and the $q^{th}$ frequency domain unit. In this case, different sensing symbols may be modulated on different sensing time domain resource blocks and/or different frequency domain units.

The following describes this embodiment of this application in different cases.

(1) Use scenario where all frequency domain resources are used for sensing signal transmission.

In this case, because phases of sensing signals sent over a same sub-carrier by adjacent OFDM symbols in a same time domain resource block in the first sensing resource block in this embodiment of this application are continuous, and insertion of a CP has no meaning for the sensing signal, the CP may be removed. To be specific, no CP may be inserted into each OFDM symbol for sensing signal transmission in this embodiment of this application, to improve a utilization rate of a spectrum resource.

It should be noted that the insertion of the CP does not cause any problem to detection of the sensing signal. If the CP needs to be maintained to match the conventional OFDM system, the CP may be inserted into each OFDM symbol for sensing signal transmission in this embodiment of this application, to maintain the same length as that of the conventional OFDM symbol.

It should be further noted that because all modulation symbols of all OFDM symbols of a same time domain resource block in the first sensing resource block on a same sub-carrier are the same in this embodiment of this application, and phases of sensing signals sent over the same sub-carrier by adjacent OFDM symbols in a same time domain resource block are continuous, the sensing signal is not affected by introducing the weighting mask and the overlap extension. To be specific, inter-carrier interference is not generated.

Further, if the initial phase value of the time domain resource block in the first sensing resource block is a dynamically determined phase value, phases of sensing signals between adjacent time domain resource blocks in adjacent first sensing resource blocks are not continuous. Therefore, by setting the weighting mask and the overlap extension, spectrum side-lobe leakage of the sensing signal between adjacent sensing time domain resource blocks may be improved.

(2) Frequency domain resource use scenario for integrated sensing and communication. To be specific, a frequency domain resource is used for both communication signal transmission and sensing signal transmission.

In this case, because a communication signal and a sensing signal are simultaneously sent and received, impact on data communication and compatibility problems need to be considered for configuration and sending of the sensing signal.

Referring to the foregoing descriptions, the insertion of the CP does not cause any impact to detection of the sensing signal. However, if the CP needs to be maintained to match the conventional OFDM system, the CP may be inserted into each OFDM symbol for sensing signal transmission in this embodiment of this application, to maintain the same length as that of the conventional OFDM symbol. In some optional embodiments, the length of the CP in the OFDM symbol for sensing signal transmission may be the same as the length of the CP in the OFDM symbol for communication signal transmission.

It should be further noted that because all modulation symbols of all OFDM symbols of a same time domain resource block in the first sensing resource block on a same sub-carrier are the same in this embodiment of this application, and phases of sensing signals sent over the same sub-carrier by adjacent OFDM symbols in a same time domain resource block are continuous, the sensing signal is not affected by introducing the weighting mask and the overlap extension. To be specific, inter-carrier interference is not generated on the foregoing sensing signal. It may be understood that the setting of the weighting mask and the overlap extension may still affect the communication signal. To be specific, inter-carrier interference is still generated on the foregoing communication signal.

Further, if the initial phase value of the time domain resource block in the first sensing resource block is a dynamically determined phase value, phases of sensing signals between adjacent time domain resource blocks in the first sensing resource block are not continuous. Therefore, by setting the weighting mask and the overlap extension, spectrum side-lobe leakage of the sensing signal between adjacent sensing time domain resource blocks may be improved.

Refer to FIG. 11. FIG. 11 is a flowchart of a signal transmission method according to an embodiment of this application. The method may be performed by a signal receiving device. As shown in FIG. 11, the method includes the following steps:

Step 1101: A signal receiving device receives a first signal based on a first resource block.

The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

Optionally, the first sensing resource block includes at least one of a second sensing resource block and a third sensing resource block. The second sensing resource block includes $S_1$ sensing resource blocks. Frequency domain resource blocks of the $S_1$ sensing resource blocks are all located within a first frequency domain range of a band. The first frequency domain range is a frequency domain range defined by a first frequency domain unit of the band and an $R_1^{th}$ frequency domain unit of the band. The third sensing resource block includes $S_2$ sensing resource blocks. Frequency domain resource blocks of the $S_2$ sensing resource blocks are all located within a second frequency domain range of the band. The second frequency domain range is a frequency domain range defined by an $R_2^{th}$ frequency domain unit of the band and an $N^{th}$ frequency domain unit of the band.

N is a quantity of frequency domain units within the band. $R_1$ is greater than or equal to 1 and is less than or equal to N. $R_2$ is greater than or equal to 1 and is less than or equal to N. $R_1+R_2$ is less than or equal to N. $S_1$ is an integer greater than or equal to 1. $S_2$ is an integer greater than or equal to 1.

Optionally, for a sensing resource block, among the $S_1$ sensing resource blocks, in which a frequency domain resource block is closest to the first frequency domain unit, a length of a time domain resource block is maximal. The length of the time domain resource block is a quantity of time domain units included in the time domain resource block.

For a sensing resource block, among the $S_2$ sensing resource blocks, in which a frequency domain resource block is closest to the $N^{th}$ frequency domain unit, a length of a time domain resource block is maximal.

Optionally, a length of a time domain resource block of an $i^{th}$ sensing resource block among the $S_1$ sensing resource blocks is less than a length of a time domain resource block of an $(i+1)^{th}$ sensing resource block among the $S_1$ sensing resource blocks. A distance between a frequency domain resource block of the $i^{th}$ sensing resource block and the first frequency domain unit is greater than a distance between a frequency domain resource block of the $(i+1)^{th}$ sensing resource block and the first frequency domain unit, where a value range of i is $[1, S_1]$.

A length of a time domain resource block of a $j^{th}$ sensing resource block among the $S_2$ sensing resource blocks is less than a length of a time domain resource block of a $(j+1)^{th}$ sensing resource block among the $S_2$ sensing resource blocks. A distance between a frequency domain resource block of the $j^{th}$ sensing resource block and the $N^{th}$ frequency domain unit is greater than a distance between a frequency domain resource block of the $(j+1)^{th}$ sensing resource block and the $N^{th}$ frequency domain unit, where a value range of j is $[1, S_2]$.

Optionally, a first resource parameter is configured by a first configuration signaling. The first resource parameter includes at least one of the following: $S_1$, $S_2$, a length of a time domain resource block of each sensing resource block among the $S_1$ sensing resource blocks, a length of a frequency domain resource block of each sensing resource block among the $S_1$ sensing resource blocks, a length of a time domain resource block of each sensing resource block among the $S_2$ sensing resource blocks, and a length of a frequency domain resource block of each sensing resource block among the $S_2$ sensing resource blocks.

The length of the time domain resource block is a quantity of time domain units included in the time domain resource block. The length of the frequency domain resource block is a quantity of frequency domain units included in the time domain resource block.

Optionally, the first signal further includes a communication signal. The first resource block further includes a communication resource block. A frequency domain resource block of the communication resource block is located within a third frequency domain range. The third frequency domain range is a frequency domain range defined by an $(R_1+1)^{th}$ frequency domain unit of the band and an $(R_2-1)^{th}$ frequency domain unit of the band.

Optionally, a time domain resource block of the communication resource block includes a time domain unit.

Optionally, a sum of a first value, a second value, and a third value is N. The first value is a sum of lengths of frequency domain resource blocks of all sensing resource blocks among the $S_1$ sensing resource blocks. The second value is a sum of lengths of frequency domain resource blocks of all sensing resource blocks among the $S_2$ sensing resource blocks. The third value is a length of the frequency domain resource block of the communication resource block.

Optionally, the time domain unit is an orthogonal frequency division multiplexing OFDM symbol. The frequency domain unit is a sub-carrier.

A first relationship satisfied between an initial phase value $\varphi_{l,m,k}$ of a $k^{th}$ sub-carrier in an $m^{th}$ OFDM symbol of an $l^{th}$ time domain resource block of the first sensing resource block and an initial phase value $\varphi_{l,1,k}$ of a $k^{th}$ sub-carrier of a first OFDM symbol in the $l^{th}$ time domain resource block is:

$$\varphi_{l,m,k} = -\frac{2\pi k\,(m-1)\,T_m}{T_{\mathrm{FFT},m}} + \varphi_{l,1,k}$$

where $T_{\mathrm{FFT},m}$ represents a time length of a discrete Fourier transform DFT of the $m^{th}$ OFDM symbol, $T_m$ represents a period of the $m^{th}$ OFDM symbol, a value range of $l$ is $[1, L]$, L is a quantity of time domain resource blocks of the first sensing resource block, a value range of m is $[1, M]$, M is a quantity of OFDM symbols of the $l^{th}$ time domain resource block, a value range of k is $[0, N-1]$, and N is a quantity of sub-carriers of the band.

Optionally, the initial phase value of the $k^{th}$ sub-carrier of the first OFDM symbol in the $l^{th}$ time domain resource block of the first sensing resource block is a fixed phase value. Alternatively,
the initial phase value of the $k^{th}$ sub-carrier of the first OFDM symbol in the $l^{th}$ time domain resource block of the first sensing resource block is a dynamically determined phase value.

Optionally, the initial phase value of the $k^{th}$ sub-carrier of the first OFDM symbol in the $l^{th}$ time domain resource block of the first sensing resource block is a phase value determined according to a clock parameter. Alternatively, the initial phase value of the $k^{th}$ sub-carrier of the first OFDM symbol in the $l^{th}$ time domain resource block of the first sensing resource block is a phase value determined according to a second configuration signaling.

Optionally, the time domain unit is an OFDM symbol. The frequency domain unit is a sub-carrier.

A first signal transmitted over an $m^{th}$ OFDM symbol of the first resource block is:

$$\mathrm{Re}\left\{\sum_{k=0}^{N-1} x_{m',k}(t) \cdot e^{j2\pi f_0\left(t-(m'-1)T_{m'}-T_{\mathrm{CP},m'}\right)}\right\}$$

where Re represents taking a real part of a complex number, $\sum_{k=0}^{N-1} x_{m',k}(t)$ represents a baseband signal over the $m^{th}$ OFDM symbol of the first resource block, $T_{m'}$ represents a period of the $m^{th}$ OFDM symbol, $T_{\mathrm{CP},m'}$ represents a length of a cyclic prefix CP of the $m^{th}$ OFDM symbol, t represents a current time, $f_0$ represents a center frequency, N is a quantity of sub-carriers of the band, and $m'$ is a positive integer.

Optionally, the time domain unit is an OFDM symbol. A weighting mask function is set for each OFDM symbol in the time domain resource block of the first sensing resource block. A left edge weighting function and a right edge weighting function for generating the weighting mask function satisfy the following conditions:

$$h_L\left(t+\frac{T_0}{2}\right)+h_R\left(t-\frac{T_0}{2}\right)=\begin{cases}1 & ,\ |t|\le\dfrac{T_0}{2}\\0 & ,\ \text{Otherwise}\end{cases}$$

where $h_L\left(t+\dfrac{T_0}{2}\right)$ represents the left edge weighting function, $h_R\left(t-\dfrac{T_0}{2}\right)$ represents the right edge weighting function, and a time width of the left edge weighting function and a time width of the right edge weighting function are both $T_0$.

Optionally, a modulation symbol on a $q^{th}$ frequency domain unit of a $p^{th}$ time domain resource block of the first sensing resource block is a fixed sensing symbol. A value range of p is [1, L]. L is a quantity of time domain resource blocks of the first sensing resource block. A value range of q is [1, N-1]. N is a quantity of frequency domain units of the band. Alternatively,

a modulation symbol on a $q^{th}$ frequency domain unit of a $p^{th}$ time domain resource block of the first sensing resource block is a dynamically determined sensing symbol.

It should be noted that for an implementation of this embodiment, refer to related descriptions in the embodiment shown in FIG. 5. Details are not described herein.

The following describes the signal transmission method according to this embodiment of this application with reference to examples.

As shown in FIG. 12, sensing resource blocks of $I^{(L)}=3$ and $I^{(R)}=3$ are respectively placed at left and right ends of an entire band. For simplicity, sizes of sensing frequency domain resource blocks are set to be the same. To be specific,

$$\mathrm{N}_i^{(L)}=\mathrm{N}_i^{(R)}=2\ ,\ \text{where i = 1, 2,3 .}$$

For parameters of sensing time domain resource blocks, $\mathrm{M}_1^{(L)}=\mathrm{M}_1^{(R)}=4$ , $\mathrm{M}_2^{(L)}=\mathrm{M}_2^{(R)}=8$ , and $\mathrm{M}_3^{(L)}=\mathrm{M}_3^{(R)}\to\infty$ are respectively configured. Therefore, lengths of the sensing time domain resource blocks satisfy the following conditions:

$$8\mathrm{M}_0=2\mathrm{M}_1^{(L)}=2\mathrm{M}_1^{(R)}=\mathrm{M}_2^{(L)}=\mathrm{M}_2^{(R)}=8$$

In addition, except a left sensing resource block and a right sensing resource block of a band, remaining frequency domain resources, namely $N_0$ sub-carriers, are allocated to communication data transmission, namely communication resource blocks.

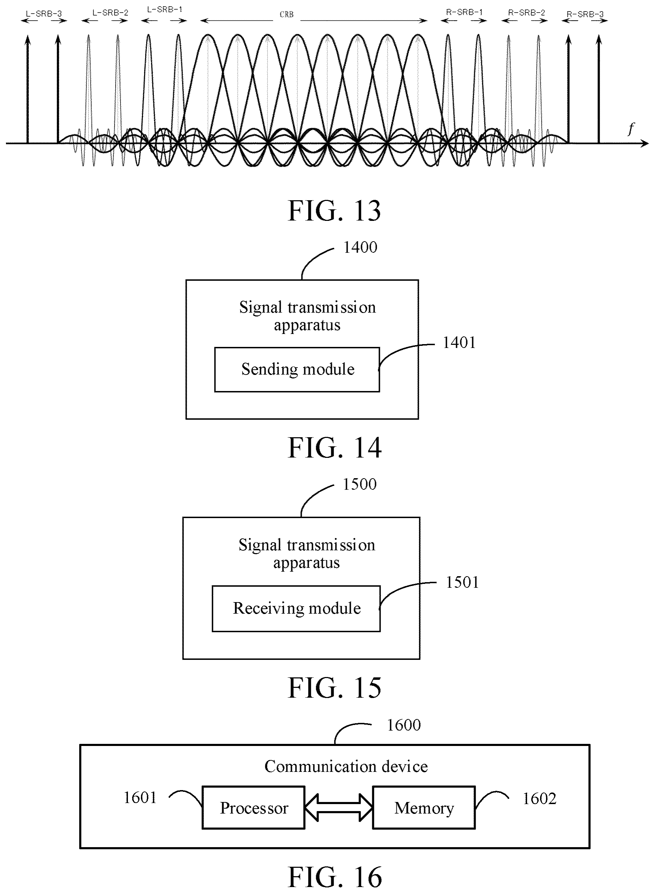

FIG. 13 is a schematic diagram of a communication frequency domain signal and a sensing frequency domain signal. It can be learned from FIG. 13 that the following information is:

although the configured communication resource block and sensing resource block are different, spacing of the sub-carriers occupied in the band is unchanged and is inversely proportional to a DFT length. To be specific, $1/T_{FFT}$.

A communication signal in the communication resource block has the largest sub-carrier bandwidth because the length of a communication modulation symbol is the same as the length of an OFDM symbol. A sub-carrier frequency domain signal occupied for communication does not differ from conventional OFDM.

A sub-carrier bandwidth occupied by the sensing signal is less than a bandwidth occupied by the communication sub-carrier. For example, a length $\mathrm{M}_1^{(L)}$ or $\mathrm{M}_1^{(R)}$ of an STRB in a first SRB is 4 times a symbol length $M_0$ of a CRB. Therefore, a bandwidth occupied by a sub-carrier signal in the first SRB is one fourth of that occupied by a communication sub-carrier signal. Similarly, a length $\mathrm{M}_2^{(L)}$ or $\mathrm{M}_2^{(R)}$ of an STRB in a second SRB is 8 times a symbol length $M_0$ of a CRB. Therefore, a bandwidth occupied by a sub-carrier signal in the second SRB is one eighth of that occupied by a communication sub-carrier signal.

When a length $\mathrm{M}_3^{(L)}$ or $\mathrm{M}_3^{(R)}$ of an STRB in a third SRB tends to infinity, a bandwidth occupied by a sub-carrier signal of the SRB tends to zero. To be specific, in this case, the SRB does not generate any spectrum side-lobe.

According to the foregoing configuration manner of the communication resource block and the sensing resource block in this embodiment of this application, flexibility of resource allocation can be increased, and spectrum side-lobe leakage can be reduced. In addition, different patterns (Pattern) of sensing signals are designed by using a small-sized sensing time domain resource block, thereby greatly improving sensing signal synchronization and sensing performance.

In some optional embodiments, in a sensing scenario where a gNB performs sending and a gNB performs receiving, because signal synchronization cannot be accurately completed for a sensing signal, sensing on a target object needs to be completed by using a radar matched filter method. Further, sensing of the sensing target may be completed by designing a Costas signal using different STRBs.

It should be noted that the signal transmission method provided in this embodiment of this application may be performed by the signal transmission apparatus or a control module for performing the signal transmission method in the signal transmission apparatus. In this embodiment of this application, an example in which the signal transmission apparatus performs the signal transmission method is used for describing the signal transmission apparatus provided in this embodiment of this application.

Refer to FIG. 14. FIG. 14 is a diagram of a structure of a signal transmission apparatus according to an embodiment of this application. As shown in FIG. 14, the signal transmission apparatus 1400 includes:

a sending module 1401, configured to send a first signal based on a first resource block.

The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

Optionally, the first sensing resource block includes at least one of a second sensing resource block and a third sensing resource block. The second sensing resource block includes $S_1$ sensing resource blocks. Frequency domain resource blocks of the $S_1$ sensing resource blocks are all located within a first frequency domain range of a band. The first frequency domain range is a frequency domain range defined by a first frequency domain unit of the band and an $R_1^{th}$ frequency domain unit of the band. The third sensing resource block includes $S_2$ sensing resource blocks. Frequency domain resource blocks of the $S_2$ sensing resource blocks are all located within a second frequency domain range of the band. The second frequency domain range is a frequency domain range defined by an $R_2^{th}$ frequency domain unit of the band and an $N^{th}$ frequency domain unit of the band.

N is a quantity of frequency domain units within the band. $R_1$ is greater than or equal to 1 and is less than or equal to N. $R_2$ is greater than or equal to 1 and is less than or equal to N. $R_1+R_2$ is less than or equal to N. $S_1$ is an integer greater than or equal to 1. $S_2$ is an integer greater than or equal to 1.

Optionally, for a sensing resource block, among the $S_1$ sensing resource blocks, in which a frequency domain resource block is closest to the first frequency domain unit, a length of a time domain resource block is maximal. For a sensing resource block, among the $S_1$ sensing resource blocks, in which a frequency domain resource block is furthest from the first frequency domain unit, a length of a time domain resource block is minimal. The length of the time domain resource block is a quantity of time domain units included in the time domain resource block.

For a sensing resource block, among the $S_2$ sensing resource blocks, in which a frequency domain resource block is closest to the $N^{th}$ frequency domain unit, a length of a time domain resource block is maximal. For a sensing resource block, among the $S_2$ sensing resource blocks, in which a frequency domain resource block is furthest from the $N^{th}$ frequency domain unit, a length of a time domain resource block is minimal.

Optionally, a length of a time domain resource block of an $i^{th}$ sensing resource block among the $S_1$ sensing resource blocks is less than a length of a time domain resource block of an $(i+1)^{th}$ sensing resource block among the $S_1$ sensing resource blocks. A distance between a frequency domain resource block of the $i^{th}$ sensing resource block and the first frequency domain unit is greater than a distance between a frequency domain resource block of the $(i+1)^{th}$ sensing resource block and the first frequency domain unit, where a value range of i is [1, $S_1$].

A length of a time domain resource block of a $j^{th}$ sensing resource block among the $S_2$ sensing resource blocks is less than a length of a time domain resource block of a $(j+1)^{th}$ sensing resource block among the $S_2$ sensing resource blocks. A distance between a frequency domain resource block of the $j^{th}$ sensing resource block and the $N^{th}$ frequency domain unit is greater than a distance between a frequency domain resource block of the $(j+1)^{th}$ sensing resource block and the $N^{th}$ frequency domain unit, where a value range of j is [1, $S_2$].

Optionally, a first resource parameter is configured by a first configuration signaling. The first resource parameter includes at least one of the following: $S_1$, $S_2$, a length of a time domain resource block of each sensing resource block among the $S_1$ sensing resource blocks, a length of a frequency domain resource block of each sensing resource block among the $S_1$ sensing resource blocks, a length of a time domain resource block of each sensing resource block among the $S_2$ sensing resource blocks, and a length of a frequency domain resource block of each sensing resource block among the $S_2$ sensing resource blocks.

The length of the time domain resource block is a quantity of time domain units included in the time domain resource block. The length of the frequency domain resource block is a quantity of frequency domain units included in the time domain resource block.

Optionally, the first signal further includes a communication signal. The first resource block further includes a communication resource block. A frequency domain resource block of the communication resource block is located within a third frequency domain range. The third frequency domain range is a frequency domain range defined by an $(R_1+1)^{th}$ frequency domain unit of the band and an $(R_2-1)^{th}$ frequency domain unit of the band.

Optionally, a time domain resource block of the communication resource block includes a time domain unit.

Optionally, a sum of a first value, a second value, and a third value is N. The first value is a sum of lengths of frequency domain resource blocks of all sensing resource blocks among the $S_1$ sensing resource blocks. The second value is a sum of lengths of frequency domain resource blocks of all sensing resource blocks among the $S_2$ sensing resource blocks. The third value is a length of the frequency domain resource block of the communication resource block.

Optionally, the time domain unit is an orthogonal frequency division multiplexing OFDM symbol. The frequency domain unit is a sub-carrier.

A first relationship satisfied between an initial phase value $\varphi_{l,m,k}$ of a $k^{th}$ sub-carrier in an $m^{th}$ OFDM symbol of an $l^{th}$ time domain resource block of the first sensing resource block and an initial phase value $\varphi_{l,1,k}$ of a $k^{th}$ sub-carrier of a first OFDM symbol in the $l^{th}$ time domain resource block is:

$$\varphi_{l,m,k} = -\frac{2\pi k\,(m-1)\,T_m}{T_{\mathrm{FFT},m}} + \varphi_{l,1,k}$$

where $T_{\mathrm{FFT},m}$ represents a time length of a discrete Fourier transform DFT of the $m^{th}$ OFDM symbol, $T_m$ represents a period of the $m^{th}$ OFDM symbol, a value range of l is [1, L], L is a quantity of time domain resource blocks of the first sensing resource block, a value range of m is [1, M], M is a quantity of OFDM symbols of the $l^{th}$ time domain resource block, a value range of k is [0, N-1], and N is a quantity of sub-carriers of the band.

Optionally, the initial phase value of the $k^{th}$ sub-carrier of the first OFDM symbol in the $l^{th}$ time domain resource block of the first sensing resource block is a fixed phase value. Alternatively, the initial phase value of the $k^{th}$ sub-carrier of the first OFDM symbol in the $l^{th}$ time domain resource block of the first sensing resource block is a dynamically determined phase value.

Optionally, the initial phase value of the $k^{th}$ sub-carrier of the first OFDM symbol in the $l^{th}$ time domain resource block of the first sensing resource block is a phase value determined according to a clock parameter. Alternatively, the initial phase value of the $k^{th}$ sub-carrier of the first OFDM symbol in the $l^{th}$ time domain resource block of the first sensing resource block is a phase value determined according to a second configuration signaling.

Optionally, the time domain unit is an OFDM symbol. The frequency domain unit is a sub-carrier.

A first signal transmitted over an $m'^{th}$ OFDM symbol of the first resource block is:

$$\mathrm{Re}\left\{\sum_{k=0}^{N-1} x_{m',k}(t) \cdot e^{j2\pi f_0\left(t-(m'-1)T_{m'}-T_{\mathrm{CP},m'}\right)}\right\}$$

where Re represents taking a real part of a complex number, $\sum_{k=0}^{N-1} x_{m',k}(t)$ represents a baseband signal over the $m'^{th}$ OFDM symbol of the first resource block, $T_{m'}$ represents a period of the $m'^{th}$ OFDM symbol, $T_{\mathrm{CP},m'}$ represents a length of a cyclic prefix CP of the $m'^{th}$ OFDM symbol, t represents a current time, $f_0$ represents a center frequency, N is a quantity of sub-carriers of the band, and $m'$ is a positive integer.

Optionally, the time domain unit is an OFDM symbol. A weighting mask function is set for each OFDM symbol in the time domain resource block of the first sensing resource block. A left edge weighting function and a right edge weighting function for generating the weighting mask function satisfy the following conditions:

$$h_L\left(t+\frac{T_0}{2}\right) + h_R\left(t-\frac{T_0}{2}\right) = \begin{cases} 1 & ,\ |t| \le \dfrac{T_0}{2} \\ 0 & ,\ \text{Otherwise} \end{cases}$$

where $h_L\left(t+\dfrac{T_0}{2}\right)$ represents the left edge weighting function, $h_R\left(t-\dfrac{T_0}{2}\right)$ represents the right edge weighting function, and a time width of the left edge weighting function and a time width of the right edge weighting function are both $T_0$.

Optionally, a modulation symbol on a $q^{th}$ frequency domain unit of a $p^{th}$ time domain resource block of the first sensing resource block is a fixed sensing symbol. A value range of p is [1, L]. L is a quantity of time domain resource blocks of the first sensing resource block. A value range of q is [1, N-1]. N is a quantity of frequency domain units of the band. Alternatively,

a modulation symbol on a $q^{th}$ frequency domain unit of a $p^{th}$ time domain resource block of the first sensing resource block is a dynamically determined sensing symbol.

The signal transmission apparatus in this embodiment of this application may be an electronic device, for example, an electronic device with an operating system, or a component in an electronic device, such as an integrated circuit or a chip. The electronic device may be a terminal or a network-side device, or another device other than the terminal or the network-side device. For example, the terminal may include but is not limited to the foregoing listed types of the terminal 11, and the network-side device may include but is not limited to the foregoing listed types of the network-side device 12. The another device may be a server, a network attached storage (Network Attached Storage, NAS), and the like. This is not specifically limited in this embodiment of this application.

The signal transmission apparatus provided in this embodiment of this application can implement the processes implemented in the method embodiment in FIG. 5, and the same technical effect can be achieved. To avoid repetition, details are not described herein.

Refer to FIG. 15. FIG. 15 is a diagram of a structure of a signal transmission apparatus according to an embodiment of this application. As shown in FIG. 15, the signal transmission apparatus 1500 includes:

a receiving module 1501, configured to receive a first signal based on a first resource block.

The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

Optionally, the first sensing resource block includes at least one of a second sensing resource block and a third sensing resource block. The second sensing resource block includes $S_1$ sensing resource blocks. Frequency domain resource blocks of the $S_1$ sensing resource blocks are all located within a first frequency domain range of a band. The first frequency domain range is a frequency domain range defined by a first frequency domain unit of the band and an $R_1^{th}$ frequency domain unit of the band. The third sensing resource block includes $S_2$ sensing resource blocks. Frequency domain resource blocks of the $S_2$ sensing resource blocks are all located within a second frequency domain range of the band. The second frequency domain range is a frequency domain range defined by an $R_2^{th}$ frequency domain unit of the band and an $N^{th}$ frequency domain unit of the band.

N is a quantity of frequency domain units within the band. $R_1$ is greater than or equal to 1 and is less than or equal to N. $R_2$ is greater than or equal to 1 and is less than or equal to N. $R_1+R_2$ is less than or equal to N. $S_1$ is an integer greater than or equal to 1. $S_2$ is an integer greater than or equal to 1.

Optionally, for a sensing resource block, among the $S_1$ sensing resource blocks, in which a frequency domain resource block is closest to the first frequency domain unit, a length of a time domain resource block is maximal. The length of the time domain resource block is a quantity of time domain units included in the time domain resource block.

For a sensing resource block, among the $S_2$ sensing resource blocks, in which a frequency domain resource block is closest to the $N^{th}$ frequency domain unit, a length of a time domain resource block is maximal.

Optionally, a length of a time domain resource block of an $i^{th}$ sensing resource block among the $S_1$ sensing resource blocks is less than a length of a time domain resource block of an $(i+1)^{th}$ sensing resource block among the $S_1$ sensing resource blocks. A distance between a frequency domain resource block of the $i^{th}$ sensing resource block and the first frequency domain unit is greater than a distance between a frequency domain resource block of the $(i+1)^{th}$ sensing resource block and the first frequency domain unit, where a value range of i is [1, $S_1$].

A length of a time domain resource block of a $j^{th}$ sensing resource block among the $S_2$ sensing resource blocks is less than a length of a time domain resource block of a $(j+1)^{th}$ sensing resource block among the $S_2$ sensing resource blocks. A distance between a frequency domain resource block of the $j^{th}$ sensing resource block and the $N^{th}$ frequency domain unit is greater than a distance between a frequency domain resource block of the $(j+1)^{th}$ sensing resource block and the $N^{th}$ frequency domain unit, where a value range of j is [1, $S_2$].

Optionally, a first resource parameter is configured by a first configuration signaling. The first resource parameter includes at least one of the following: $S_1$, $S_2$, a length of a time domain resource block of each sensing resource block among the $S_1$ sensing resource blocks, a length of a frequency domain resource block of each sensing resource block among the $S_1$ sensing resource blocks, a length of a time domain resource block of each sensing resource block among

the $S_2$ sensing resource blocks, and a length of a frequency domain resource block of each sensing resource block among the $S_2$ sensing resource blocks.

The length of the time domain resource block is a quantity of time domain units included in the time domain resource block. The length of the frequency domain resource block is a quantity of frequency domain units included in the time domain resource block.

Optionally, the first signal further includes a communication signal. The first resource block further includes a communication resource block. A frequency domain resource block of the communication resource block is located within a third frequency domain range. The third frequency domain range is a frequency domain range defined by an $(R_1+1)^{th}$ frequency domain unit of the band and an $(R_2-1)^{th}$ frequency domain unit of the band.

Optionally, a time domain resource block of the communication resource block includes a time domain unit.

Optionally, a sum of a first value, a second value, and a third value is N. The first value is a sum of lengths of frequency domain resource blocks of all sensing resource blocks among the $S_1$ sensing resource blocks. The second value is a sum of lengths of frequency domain resource blocks of all sensing resource blocks among the $S_2$ sensing resource blocks. The third value is a length of the frequency domain resource block of the communication resource block.

Optionally, the time domain unit is an orthogonal frequency division multiplexing OFDM symbol. The frequency domain unit is a sub-carrier.

A first relationship satisfied between an initial phase value $\varphi_{l,m,k}$ of a $k^{th}$ sub-carrier in an $m^{th}$ OFDM symbol of an $l^{th}$ time domain resource block of the first sensing resource block and an initial phase value $\varphi_{l,1,k}$ of a $k^{th}$ sub-carrier of a first OFDM symbol in the $l^{th}$ time domain resource block is:

$$\varphi_{l,m,k} = -\frac{2\pi k\left(m-1\right)T_m}{T_{\text{FFT},m}} + \varphi_{l,1,k}$$

where $T_{\text{FFT},m}$ represents a time length of a discrete Fourier transform DFT of the $m^{th}$ OFDM symbol, $T_m$ represents a period of the $m^{th}$ OFDM symbol, a value range of $l$ is [1, L], L is a quantity of time domain resource blocks of the first sensing resource block, a value range of m is [1, M], M is a quantity of OFDM symbols of the $l^{th}$ time domain resource block, a value range of k is [0, N-1], and N is a quantity of sub-carriers of the band.

Optionally, the initial phase value of the $k^{th}$ sub-carrier of the first OFDM symbol in the $l^{th}$ time domain resource block of the first sensing resource block is a fixed phase value. Alternatively, the initial phase value of the $k^{th}$ sub-carrier of the first OFDM symbol in the $l^{th}$ time domain resource block of the first sensing resource block is a dynamically determined phase value.

Optionally, the initial phase value of the $k^{th}$ sub-carrier of the first OFDM symbol in the $l^{th}$ time domain resource block of the first sensing resource block is a phase value determined according to a clock parameter. Alternatively, the initial phase value of the $k^{th}$ sub-carrier of the first OFDM symbol in the $l^{th}$ time domain resource block of the first sensing resource block is a phase value determined according to a second configuration signaling.

Optionally, the time domain unit is an OFDM symbol. The frequency domain unit is a sub-carrier.

A first signal transmitted over an $m^{th}$ OFDM symbol of the first resource block is:

$$\text{Re}\left\{\sum_{k=0}^{N-1} x_{m',k}(t) \cdot e^{j2\pi f_0\left(t-(m'-1)T_{m'}-T_{\text{CP},m'}\right)}\right\}$$

where Re represents taking a real part of a complex number, $\sum_{k=0}^{N-1} x_{m',k}(t)$ represents a baseband signal over the $m^{th}$ OFDM symbol of the first resource block, $T_{m'}$ represents a period of the $m^{th}$ OFDM symbol, $T_{\text{CP},m'}$ represents a length of a cyclic prefix CP of the $m^{th}$ OFDM symbol, t represents a current time, $f_0$ represents a center frequency, N is a quantity of sub-carriers of the band, and $m'$ is a positive integer.

Optionally, the time domain unit is an OFDM symbol. A weighting mask function is set for each OFDM symbol in the time domain resource block of the first sensing resource block. A left edge weighting function and a right edge weighting function for generating the weighting mask function satisfy the following conditions:

$$h_L\left(t+\frac{T_0}{2}\right)+h_R\left(t-\frac{T_0}{2}\right) = \begin{cases} 1 & ,|t| \le \dfrac{T_0}{2} \\ 0 & , \text{Otherwise} \end{cases}$$

where $h_L\left(t + \dfrac{T_0}{2}\right)$ represents the left edge weighting function, $h_R\left(t - \dfrac{T_0}{2}\right)$ represents the right edge weighting function, and a time width of the left edge weighting function and a time width of the right edge weighting function are both $T_0$.

Optionally, a modulation symbol on a $q^{th}$ frequency domain unit of a $p^{th}$ time domain resource block of the first sensing resource block is a fixed sensing symbol. A value range of p is [1, L]. L is a quantity of time domain resource blocks of the first sensing resource block. A value range of q is [1, N-1]. N is a quantity of frequency domain units of the band. Alternatively,

a modulation symbol on a $q^{th}$ frequency domain unit of a $p^{th}$ time domain resource block of the first sensing resource block is a dynamically determined sensing symbol.

The signal transmission apparatus in this embodiment of this application may be an electronic device, for example, an electronic device with an operating system, or a component in an electronic device, such as an integrated circuit or a chip. The electronic device may be a terminal or a network-side device, or another device other than the terminal or the network-side device. For example, the terminal may include but is not limited to the foregoing listed types of the terminal 11, and the network-side device may include but is not limited to the foregoing listed types of the network-side device 12. The another device may be a server, a network attached storage (Network Attached Storage, NAS), and the like. This is not specifically limited in this embodiment of this application.

The signal transmission apparatus provided in this embodiment of this application can implement the processes implemented in the method embodiment in FIG. 11, and the same technical effect can be achieved. To avoid repetition, details are not described herein.

Optionally, as shown in FIG. 16, an embodiment of this application further provides a communication device 1600, including a processor 1601 and a memory 1602. The memory 1602 has a program or an instruction executable on the processor 1601 stored therein. For example, when the communication device 1600 is a signal sending device, the program or the instruction, when executed by the processor 1601, implements the steps of the signal transmission method embodiment applied to the signal sending device, and the same technical effect can be achieved. When the communication device 1600 is a signal receiving device, the program or the instruction, when executed by the processor 1601, implements the steps of the signal transmission method embodiment applied to the signal receiving device. To avoid repetition, details are not described herein.

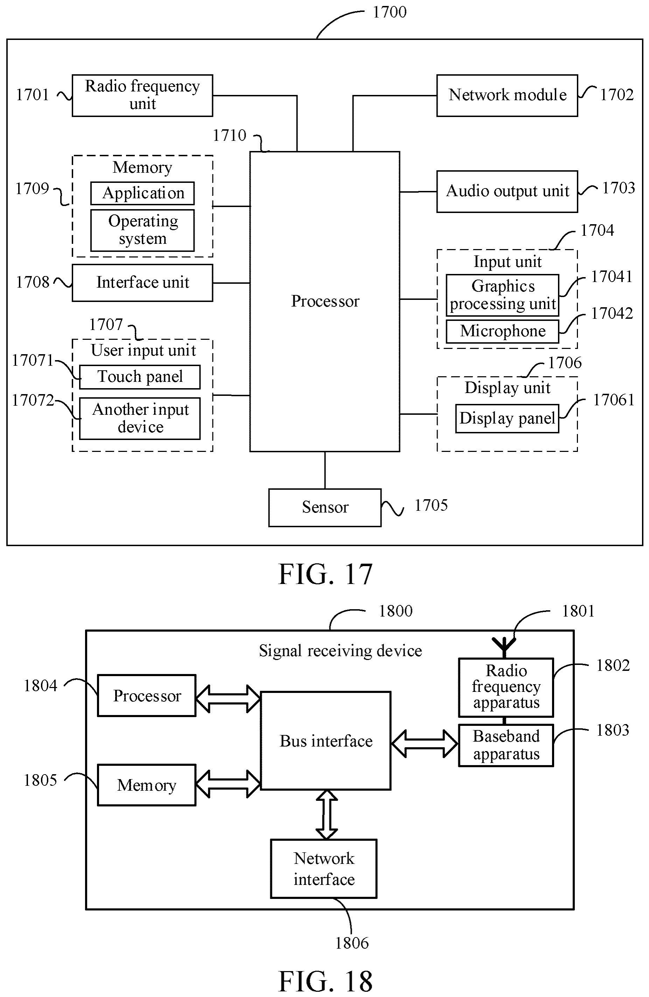

An embodiment of this application further provides a signal sending device, including a processor and a communication interface. The communication interface is configured to send a first signal based on a first resource block. The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit. The signal sending device embodiment corresponds to the foregoing signal sending device method embodiment. The implementation processes and implementations of the foregoing method embodiments are applicable to the signal sending device embodiment, and the same technical effect can be achieved. Specifically, FIG. 17 is a schematic diagram of a hardware structure of a signal sending device according to an embodiment of this application.

The signal sending device 1700 includes, but is not limited to: at least some of the following components, such as a radio frequency unit 1701, a network module 1702, an audio output unit 1703, an input unit 1704, a sensor 1705, a display unit 1706, a user input unit 1707, an interface unit 1708, a memory 1709, and a processor 1710.

A person skilled in the art may understand that the signal sending device 1700 may further include a power supply (such as a battery) for supplying power to the components. The power supply may be logically connected to the processor 1710 through a power management system, thereby implementing functions such as charging, discharging, and power consumption management through the power management system. The signal sending device structure shown in FIG. 17 does not constitute a limitation on the signal sending device. The signal sending device may include more or fewer components than shown, or combine some components, or have different component arrangements. This is not described herein again.

It should be understood that in this embodiment of this application, the input unit 1704 may include a graphics processing unit (Graphics Processing Unit, GPU) 17041 and a microphone 17042. The graphics processing unit 17041 processes image data of still images or videos obtained by an image capture apparatus (for example, a camera) in a video capture mode or an image capture mode. The display unit 1706 may include a display panel 17061. The display panel 17061 may be configured in a form of a liquid crystal display, an organic light-emitting diode, or the like. The user input unit 1707 includes at least one of a touch panel 17071 and another input device 17072. The touch panel 17071 is also referred to as a touchscreen. The touch panel 17071 may include two parts: a touch detection apparatus and a touch controller. The another input device 17072 may include, but is not limited to, a physical keyboard, a functional key (such as a volume control key or a switch key), a track ball, a mouse, and a joystick. This is not described herein again.

In this embodiment of this application, after receiving downlink data from a network-side device, the radio frequency unit 1701 may transmit the data to the processor 1710 for processing. In addition, the radio frequency unit 1701 may send uplink data to the network-side device. Generally, the radio frequency unit 1701 includes, but is not limited to, an antenna, an amplifier, a transceiver, a coupler, a low noise amplifier, a duplexer, and the like.

The memory 1709 may be configured to store a software program or instruction and various data. The memory 1709 may mainly include a first storage area in which programs or instructions are stored and a second storage area in which data is stored. In the first storage area, an operating system, an application or instruction required by at least one function (for example, a sound playing function or an image display function), and the like may be stored. In addition, the memory 1709 may include a volatile memory or a non-volatile memory. Alternatively, the memory 1709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 1709 in this embodiment of this application includes, but is not limited to, these memories and any memory of another proper type.

The processor 1710 may include one or more processing units. Optionally, the processor 1710 integrates an application processor and a modem processor. The application processor mainly processes operations related to an operating system, a user interface, an application, and the like. The modem processor mainly processes wireless communication signals, for example, a baseband processor. It may be understood that the foregoing modem processor may not be integrated into the processor 1710.

The radio frequency unit 1701 is configured to send a first signal based on a first resource block. The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

It should be understood that the signal sending device provided in this embodiment of this application may implement the processes in the signal transmission method embodiment applied to the signal sending device, and the same technical effect can be achieved. To avoid repetition, details are not described herein.

An embodiment of this application further provides a signal receiving device, including a processor and a communication interface. The communication interface is configured to receive a first signal based on a first resource block. The first signal includes a sensing signal. The first resource block includes a first sensing resource block. A time domain resource block of the first sensing resource block includes at least two continuous time domain units. All modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit. The signal receiving device embodiment corresponds to the foregoing signal receiving device method embodiment. The implementation processes and implementations of the foregoing method embodiments are applicable to the signal receiving device embodiment, and the same technical effect can be achieved.

Specifically, an embodiment of this application further provides a signal receiving device. As shown in FIG. 18, the signal receiving device 1800 includes: an antenna 1801, a radio frequency apparatus 1802, a baseband apparatus 1803, a processor 1804, and a memory 1805. The antenna 1801 is connected to the radio frequency apparatus 1802. In an uplink direction, the radio frequency apparatus 1802 receives information by using the antenna 1801, and sends the received information to the baseband apparatus 1803 for processing. In a downlink direction, the baseband apparatus 1803 processes to-be-sent information, and sends the information to the radio frequency apparatus 1802. The radio frequency apparatus 1802 processes the received information and then sends the information by using the antenna 1801.

The method performed by the signal receiving device in the foregoing embodiment may be implemented in the baseband apparatus 1803. The baseband apparatus 1803 includes a baseband processor.

The baseband apparatus 1803 may include, for example, at least one baseband plate. A plurality of chips are arranged on the baseband plate. As shown in FIG. 18, one of the plurality of chips is, for example, the baseband processor, and is connected to the memory 1805 through a bus interface, to invoke a program in the memory 1805 to perform network device operations shown in the foregoing method embodiment.

The signal receiving device may further include a network interface 1806. For example, the interface is a common public radio interface (common public radio interface, CPRI).

Specifically, the signal receiving device 1800 in this embodiment of the present disclosure further includes: an instruction or a program stored on the memory 1805 and executable on the processor 1804. The processor 1804 invokes the instruction or program in the memory 1805 to perform the method performed by the modules shown in FIG. 15, and the same technical effect is achieved. To avoid repetition, details are not described herein.

An embodiment of this application further provides a readable storage medium. The readable storage medium has a program or an instruction stored therein. The program or the instruction, when executed by a processor, implements the processes of the foregoing signal transmission method embodiment, and the same technical effect can be achieved. To avoid repetition, details are not described herein.

The processor is a processor of the terminal in the foregoing embodiments. The readable storage medium includes a computer-readable storage medium, for example, a computer read-only memory ROM, a random access memory RAM, a magnetic disk, an optical disk, and the like.

An embodiment of this application additionally provides a chip. The chip includes a processor and a communication interface. The communication interface is coupled to the processor. The processor is configured to execute a program or an instruction to implement the processes of the foregoing signal transmission method embodiment, and the same technical effect can be achieved. To avoid repetition, details are not described herein.

It should be understood that the chip mentioned in this embodiment of this application may alternatively be referred to as a system on chip, a system chip, a system on a chip or a system-on-a-chip, etc.

An embodiment of this application additionally provides a computer program/program product. The computer program/program product is stored in a storage medium. The computer program/program product is executed by at least one processor to implement the processes of the foregoing signal transmission method embodiment, and the same technical effect can be achieved. To avoid repetition, details are not described herein.

An embodiment of this application further provides a signal transmission system, including: a signal sending device and a signal receiving device. The signal sending device is configured to perform the processes in FIG. 5 and the foregoing method embodiments. The signal sending device is configured to perform the processes in FIG. 11 and the foregoing method embodiments, and the same technical effect can be achieved. To avoid repetition, details are not described herein.

It should be noted that the terms "include", "comprise", or any other variations thereof in this specification are intended to cover a non-exclusive inclusion, such that a process, method, article, or apparatus including a series of elements not only includes those elements, but also includes other elements that are not explicitly listed, or also includes elements inherent to such process, method, article, or apparatus. Without more restrictions, the elements defined by the sentence "including a ..." or "comprising a" do not exclude existence of other identical elements in the process, the method, the article, or the apparatus including the elements. Moreover, it should be noted that the scope of the method and apparatus in the implementations of this application is not limited to performing functions in the order shown or discussed, but may include performing functions in a substantially concurrent manner or in reverse order depending on the functionality involved. For example, the method described may be performed in an order different from that described, and various steps may also be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and a commodity hardware platform or by using hardware. With such understanding, the technical solution of this application, in essence or from the view of part contributing to the related art, may be embodied in a form of a computer software product. The computer software product is stored in a storage medium (such as an ROM/RAM, a magnetic disk, and an optical disk) and includes several instructions for enabling a terminal (which may be a mobile phone, a computer, a server, an air conditioner, a network device, etc.) to perform the method according to the embodiments of this application.

Embodiments of this application are described above with reference to the accompanying drawings. However, this application is not limited to the foregoing specific implementations. The foregoing specific implementations are only illustrative rather than restrictive. Inspired by this application, a person of ordinary skill in the art may still derive a plurality of variations without departing from the essence of this application and the protection scope of the claims. All these variations shall fall within the protection of this application.

## Claims

1. A signal transmission method, comprising:

sending, by a signal sending device, a first signal based on a first resource block,
wherein the first signal comprises a sensing signal, the first resource block comprises a first sensing resource block, a time domain resource block of the first sensing resource block comprises at least two continuous time domain units, all modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

2. The method according to claim 1, wherein the first sensing resource block comprises at least one of a second sensing resource block and a third sensing resource block; the second sensing resource block comprises $S_1$ sensing resource blocks, frequency domain resource blocks of the $S_1$ sensing resource blocks are all located within a first frequency domain range of a band, and the first frequency domain range is a frequency domain range defined by a first frequency domain unit of the band and an $R_1^{th}$ frequency domain unit of the band; and the third sensing resource block comprises $S_2$ sensing resource blocks, frequency domain resource blocks of the $S_2$ sensing resource blocks are all located within a second frequency domain range of the band, and the second frequency domain range is a frequency domain range defined by an $R_2^{th}$ frequency domain unit of the band and an $N^{th}$ frequency domain unit of the band, wherein N is a quantity of frequency domain units within the band, $R_1$ is greater than or equal to 1 and is less than or equal to N, $R_2$ is greater than or equal to 1 and is less than or equal to N, $R_1+R_2$ is less than or equal to N, $S_1$ is an integer greater than or equal to 1, and $S_2$ is an integer greater than or equal to 1.

3. The method according to claim 2, wherein for a sensing resource block, among the $S_1$ sensing resource blocks, in which a frequency domain resource block is closest to the first frequency domain unit, a length of a time domain resource block is maximal, and the length of the time domain resource block is a quantity of time domain units comprised in the time domain resource block; and
for a sensing resource block, among the $S_2$ sensing resource blocks, in which a frequency domain resource block is closest to the $N^{th}$ frequency domain unit, a length of a time domain resource block is maximal.

4. The method according to claim 3, wherein a length of a time domain resource block of an $i^{th}$ sensing resource block among the $S_1$ sensing resource blocks is less than a length of a time domain resource block of an $(i+1)^{th}$ sensing resource block among the $S_1$ sensing resource blocks, a distance between a frequency domain resource block of the $i^{th}$ sensing resource block and the first frequency domain unit is greater than a distance between a frequency domain resource block of the $(i+1)^{th}$ sensing resource block and the first frequency domain unit, and a value range of i is $[1, S_1]$; and
a length of a time domain resource block of a $j^{th}$ sensing resource block among the $S_2$ sensing resource blocks is less than a length of a time domain resource block of a $(j+1)^{th}$ sensing resource block among the $S_2$ sensing resource blocks, a distance between a frequency domain resource block of the $j^{th}$ sensing resource block and the $N^{th}$ frequency domain unit is greater than a distance between a frequency domain resource block of the $(j+1)^{th}$ sensing resource block and the $N^{th}$ frequency domain unit, and a value range of j is $[1, S_2]$.

5. The method according to claim 2, wherein a first resource parameter is configured by a first configuration signaling, and the first resource parameter comprises at least one of the following: $S_1$, $S_2$, a length of a time domain resource block of each sensing resource block among the $S_1$ sensing resource blocks, a length of a frequency domain resource block of each sensing resource block among the $S_1$ sensing resource blocks, a length of a time domain resource block of each sensing resource block among the $S_2$ sensing resource blocks, and a length of a frequency domain resource block of each sensing resource block among the $S_2$ sensing resource blocks, wherein the length of the time domain resource block is a quantity of time domain units comprised in the time domain resource block, and the length of the frequency domain resource block is a quantity of frequency domain units comprised in the time domain resource block.

6. The method according to claim 2, wherein the first signal further comprises a communication signal, the first resource block further comprises a communication resource block, a frequency domain resource block of the communication resource block is located within a third frequency domain range, and the third frequency domain range is a frequency domain range defined by an $(R_1+1)^{th}$ frequency domain unit of the band and an $(R_2-1)^{th}$ frequency domain unit of the band.

7. The method according to claim 6, wherein a time domain resource block of the communication resource block comprises a time domain unit.

8. The method according to claim 6, wherein a sum of a first value, a second value, and a third value is N, the first value is a sum of lengths of frequency domain resource blocks of all sensing resource blocks among the $S_1$ sensing resource blocks, the second value is a sum of lengths of frequency domain resource blocks of all sensing resource blocks among the $S_2$ sensing resource blocks, and the third value is a length of the frequency domain resource block of the communication resource block.

9. The method according to any one of claims 1 to 8, wherein the time domain unit is an orthogonal frequency division multiplexing OFDM symbol, and the frequency domain unit is a sub-carrier; and

a first relationship satisfied between an initial phase value $\varphi_{l,m,k}$ of a $k^{th}$ sub-carrier in an $m^{th}$ OFDM symbol of an $l^{th}$ time domain resource block of the first sensing resource block and an initial phase value $\varphi_{l,1,k}$ of a $k^{th}$ sub-carrier of a first OFDM symbol in the $l^{th}$ time domain resource block is:

$$\varphi_{l,m,k} = -\frac{2\pi k \left( m - 1 \right) T_m}{T_{\text{FFT},m}} + \varphi_{l,1,k}$$

wherein $T_{\text{FFT},m}$ represents a time length of a discrete Fourier transform DFT of the $m^{th}$ OFDM symbol, $T_m$ represents a period of the $m^{th}$ OFDM symbol, a value range of $l$ is [1, L], L is a quantity of time domain resource blocks of the first sensing resource block, a value range of m is [1, M], M is a quantity of OFDM symbols of the $l^{th}$ time domain resource block, a value range of k is [0, N-1], and N is a quantity of sub-carriers of the band.

10. The method according to claim 9, wherein the initial phase value of the $k^{th}$ sub-carrier of the first OFDM symbol in the $l^{th}$ time domain resource block of the first sensing resource block is a fixed phase value; or,
the initial phase value of the $k^{th}$ sub-carrier of the first OFDM symbol in the $l^{th}$ time domain resource block of the first sensing resource block is a dynamically determined phase value.

11. The method according to claim 10, wherein the initial phase value of the $k^{th}$ sub-carrier of the first OFDM symbol in the $l^{th}$ time domain resource block of the first sensing resource block is a phase value determined according to a clock parameter; or,
the initial phase value of the $k^{th}$ sub-carrier of the first OFDM symbol in the $l^{th}$ time domain resource block of the first sensing resource block is a phase value determined according to a second configuration signaling.

12. The method according to any one of claims 1 to 11, wherein the time domain unit is an OFDM symbol, and the frequency domain unit is a sub-carrier; and

a first signal transmitted over an $m'^{th}$ OFDM symbol of the first resource block is:

$$\text{Re}\left\{ \sum_{k=0}^{N-1} x_{m',k}(t) \cdot e^{j2\pi f_0 \left( t - (m'-1)T_{m'} - T_{\text{CP},m'} \right)} \right\}$$

wherein Re represents taking a real part of a complex number, $\sum_{k=0}^{N-1} x_{m',k}(t)$ represents a baseband signal over the $m'^{th}$ OFDM symbol of the first resource block, $T_{m'}$ represents a period of the $m'^{th}$ OFDM symbol, $T_{\text{CP},m'}$ represents a length of a cyclic prefix CP of the $m'^{th}$ OFDM symbol, t represents a current time, $f_0$ represents a center frequency, N is a quantity of sub-carriers of the band, and $m'$ is a positive integer.

13. The method according to any one of claims 1 to 12, wherein the time domain unit is an OFDM symbol; and a weighting mask function is set for each OFDM symbol in the time domain resource block of the first sensing resource block, and a left edge weighting function and a right edge weighting function for generating the weighting mask function satisfy the following conditions:

$$h_L\left( t + \frac{T_0}{2} \right) + h_R\left( t - \frac{T_0}{2} \right) = \begin{cases} 1 & , \ |t| \leq \dfrac{T_0}{2} \\ 0 & , \ \text{Otherwise} \end{cases}$$

wherein $h_{L}\left(t+\dfrac{T_0}{2}\right)$ represents the left edge weighting function, $h_{R}\left(t-\dfrac{T_0}{2}\right)$ represents the right edge weighting function, and a time width of the left edge weighting function and a time width of the right edge weighting function are both $T_0$.

14. The method according to any one of claims 1 to 13, wherein a modulation symbol on a $q^{th}$ frequency domain unit of a $p^{th}$ time domain resource block of the first sensing resource block is a fixed sensing symbol, a value range of p is [1, L], L is a quantity of time domain resource blocks of the first sensing resource block, a value range of q is [1, N-1], and N is a quantity of frequency domain units of the band; or,
a modulation symbol on a $q^{th}$ frequency domain unit of a $p^{th}$ time domain resource block of the first sensing resource block is a dynamically determined sensing symbol.

15. A signal transmission method, comprising:

receiving, by a signal receiving device, a first signal based on a first resource block,
wherein the first signal comprises a sensing signal, the first resource block comprises a first sensing resource block, a time domain resource block of the first sensing resource block comprises at least two continuous time domain units, all modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

16. The method according to claim 15, wherein the first sensing resource block comprises at least one of a second sensing resource block and a third sensing resource block; the second sensing resource block comprises $S_1$ sensing resource blocks, frequency domain resource blocks of the $S_1$ sensing resource blocks are all located within a first frequency domain range of a band, and the first frequency domain range is a frequency domain range defined by a first frequency domain unit of the band and an $R_1^{th}$ frequency domain unit of the band; and the third sensing resource block comprises $S_2$ sensing resource blocks, frequency domain resource blocks of the $S_2$ sensing resource blocks are all located within a second frequency domain range of the band, and the second frequency domain range is a frequency domain range defined by an $R_2^{th}$ frequency domain unit of the band and an $N^{th}$ frequency domain unit of the band,
wherein N is a quantity of frequency domain units within the band, $R_1$ is greater than or equal to 1 and is less than or equal to N, $R_2$ is greater than or equal to 1 and is less than or equal to N, $R_1+R_2$ is less than or equal to N, $S_1$ is an integer greater than or equal to 1, and $S_2$ is an integer greater than or equal to 1.

17. The method according to claim 16, wherein for a sensing resource block, among the $S_1$ sensing resource blocks, in which a frequency domain resource block is closest to the first frequency domain unit, a length of a time domain resource block is maximal, and the length of the time domain resource block is a quantity of time domain units comprised in the time domain resource block; and
for a sensing resource block, among the $S_2$ sensing resource blocks, in which a frequency domain resource block is closest to the $N^{th}$ frequency domain unit, a length of a time domain resource block is maximal.

18. The method according to claim 17, wherein a length of a time domain resource block of an $i^{th}$ sensing resource block among the $S_1$ sensing resource blocks is less than a length of a time domain resource block of an $(i+1)^{th}$ sensing resource block among the $S_1$ sensing resource blocks, a distance between a frequency domain resource block of the $i^{th}$ sensing resource block and the first frequency domain unit is greater than a distance between a frequency domain resource block of the $(i+1)^{th}$ sensing resource block and the first frequency domain unit, and a value range of i is [1, $S_1$]; and
a length of a time domain resource block of a $j^{th}$ sensing resource block among the $S_2$ sensing resource blocks is less than a length of a time domain resource block of a $(j+1)^{th}$ sensing resource block among the $S_2$ sensing resource blocks, a distance between a frequency domain resource block of the $j^{th}$ sensing resource block and the $N^{th}$ frequency domain unit is greater than a distance between a frequency domain resource block of the $(j+1)^{th}$ sensing resource block and the $N^{th}$ frequency domain unit, and a value range of j is [1, $S_2$].

19. The method according to claim 16, wherein a first resource parameter is configured by a first configuration signaling, and the first resource parameter comprises at least one of the following: $S_1$, $S_2$, a length of a time domain resource block of each sensing resource block among the $S_1$ sensing resource blocks, a length of a frequency domain resource block of each sensing resource block among the $S_1$ sensing resource blocks, a length of a time domain resource block of each sensing resource block among the $S_2$ sensing resource blocks, and a length of a frequency domain resource block of each sensing resource block among the $S_2$ sensing resource blocks,

wherein the length of the time domain resource block is a quantity of time domain units comprised in the time domain resource block, and the length of the frequency domain resource block is a quantity of frequency domain units comprised in the time domain resource block.

20. The method according to claim 16, wherein the first signal further comprises a communication signal, the first resource block further comprises a communication resource block, a frequency domain resource block of the communication resource block is located within a third frequency domain range, and the third frequency domain range is a frequency domain range defined by an $(R_1+1)^{th}$ frequency domain unit of the band and an $(R_2-1)^{th}$ frequency domain unit of the band.

21. The method according to claim 20, wherein a time domain resource block of the communication resource block comprises a time domain unit.

22. The method according to claim 20, wherein a sum of a first value, a second value, and a third value is N, the first value is a sum of lengths of frequency domain resource blocks of all sensing resource blocks among the $S_1$ sensing resource blocks, the second value is a sum of lengths of frequency domain resource blocks of all sensing resource blocks among the $S_2$ sensing resource blocks, and the third value is a length of the frequency domain resource block of the communication resource block.

23. The method according to any one of claims 15 to 22, wherein the time domain unit is an orthogonal frequency division multiplexing OFDM symbol, and the frequency domain unit is a sub-carrier; and

a first relationship satisfied between an initial phase value $\varphi_{l,m,k}$ of a $k^{th}$ sub-carrier in an $m^{th}$ OFDM symbol of an $l^{th}$ time domain resource block of the first sensing resource block and an initial phase value $\varphi_{l,1,k}$ of a $k^{th}$ sub-carrier of a first OFDM symbol in the $l^{th}$ time domain resource block is:

$$\varphi_{l,m,k} = -\frac{2\pi k \left(m-1\right) T_m}{T_{\mathrm{FFT},m}} + \varphi_{l,1,k}$$

wherein $T_{\mathrm{FFT},m}$ represents a time length of a discrete Fourier transform DFT of the $m^{th}$ OFDM symbol, $T_m$ represents a period of the $m^{th}$ OFDM symbol, a value range of $l$ is [1, L], L is a quantity of time domain resource blocks of the first sensing resource block, a value range of m is [1, M], M is a quantity of OFDM symbols of the $l^{th}$ time domain resource block, a value range of k is [0, N-1], and N is a quantity of sub-carriers of the band.

24. The method according to claim 23, wherein the initial phase value of the $k^{th}$ sub-carrier of the first OFDM symbol in the $l^{th}$ time domain resource block of the first sensing resource block is a fixed phase value; or, the initial phase value of the $k^{th}$ sub-carrier of the first OFDM symbol in the $l^{th}$ time domain resource block of the first sensing resource block is a dynamically determined phase value.

25. The method according to claim 24, wherein the initial phase value of the $k^{th}$ sub-carrier of the first OFDM symbol in the $l^{th}$ time domain resource block of the first sensing resource block is a phase value determined according to a clock parameter; or, the initial phase value of the $k^{th}$ sub-carrier of the first OFDM symbol in the $l^{th}$ time domain resource block of the first sensing resource block is a phase value determined according to a second configuration signaling.

26. The method according to any one of claims 15 to 25, wherein the time domain unit is an OFDM symbol, and the frequency domain unit is a sub-carrier; and

a first signal transmitted over an $m^{th}$ OFDM symbol of the first resource block is:

$$\mathrm{Re}\left\{\sum_{k=0}^{N-1} x_{m',k}(t) \cdot e^{j2\pi f_0\left(t-(m'-1)T_{m'}-T_{\mathrm{CP},m'}\right)}\right\}$$

wherein Re represents taking a real part of a complex number, $\sum_{k=0}^{N-1} x_{m',k}(t)$ represents a baseband signal over the $m^{th}$ OFDM symbol of the first resource block, $T_{m'}$ represents a period of the $m^{th}$ OFDM symbol, $T_{CP,m'}$ represents a length of a cyclic prefix CP of the $m'^{th}$ OFDM symbol, t represents a current time, $f_0$ represents a center frequency, N is a quantity of sub-carriers of the band, and $m'$ is a positive integer.

27. The method according to any one of claims 15 to 26, wherein the time domain unit is an OFDM symbol; and a weighting mask function is set for each OFDM symbol in the time domain resource block of the first sensing resource block, and a left edge weighting function and a right edge weighting function for generating the weighting mask function satisfy the following conditions:

$$h_L\left(t+\frac{T_0}{2}\right)+h_R\left(t-\frac{T_0}{2}\right)=\begin{cases}1 & ,\ |t|\le\dfrac{T_0}{2}\\ 0 & ,\ \text{Otherwise}\end{cases}$$

wherein $h_L\left(t+\dfrac{T_0}{2}\right)$ represents the left edge weighting function, $h_R\left(t-\dfrac{T_0}{2}\right)$ represents the right edge weighting function, and a time width of the left edge weighting function and a time width of the right edge weighting function are both $T_0$.

28. The method according to any one of claims 15 to 27, wherein a modulation symbol on a $q^{th}$ frequency domain unit of a $p^{th}$ time domain resource block of the first sensing resource block is a fixed sensing symbol, a value range of p is [1, L], L is a quantity of time domain resource blocks of the first sensing resource block, a value range of q is [1, N-1], and N is a quantity of frequency domain units of the band; or,
a modulation symbol on a $q^{th}$ frequency domain unit of a $p^{th}$ time domain resource block of the first sensing resource block is a dynamically determined sensing symbol.

29. A signal transmission apparatus, comprising:

a sending module, configured to send a first signal based on a first resource block,
wherein the first signal comprises a sensing signal, the first resource block comprises a first sensing resource block, a time domain resource block of the first sensing resource block comprises at least two continuous time domain units, all modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

30. A signal transmission apparatus, comprising:

a receiving module, configured to receive a first signal based on a first resource block,
wherein the first signal comprises a sensing signal, the first resource block comprises a first sensing resource block, a time domain resource block of the first sensing resource block comprises at least two continuous time domain units, all modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit.

31. A signal sending device, comprising a processor and a memory, wherein the memory stores a program or an instruction executable on the processor, and the program or the instruction, when executed by the processor, implements the steps of the signal transmission method according to any one of claims 1 to 14.

32. A signal receiving device, comprising a processor and a memory, wherein the memory stores a program or an instruction executable on the processor, and the program or the instruction, when executed by the processor, implements the steps of the signal transmission method according to any one of claims 15 to 28.

33. A readable storage medium, the readable storage medium having a program or an instruction stored therein, wherein the program or the instruction, when executed by a processor, implements the steps of the signal transmission method according to any one of claims 1 to 14 or implements the steps of the signal transmission method according to any one of claims 15 to 28.

FIG. 1

FIG. 2

(a)

(b)

(c)

Overlap extension

Overlap extension

$t$

**FIG. 3**

(a)

(b)

(c)

Overlap extension

Overlap extension

$t$

**FIG. 4**

A signal sending device sends a first signal based on a first resource block, where the first signal includes a sensing signal, the first resource block includes a first sensing resource block, a time domain resource block of the first sensing resource block includes at least two continuous time domain units, all modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit

~ 501

**FIG. 5**

OFDM symbol $m$: for example, 1, 1, 1, 1     OFDM symbol $m+1$: for example, $-1$, 1, 1, $-1$

$\leftarrow T_{CP} \rightarrow \leftarrow$    $T_{FFT}$    $\rightarrow \leftarrow T_{CP} \rightarrow \leftarrow$    $T_{FFT}$

## FIG. 6

OFDM symbol $m$: for example, 1, 1, 1, 1     OFDM symbol $m+1$: for example, 1, 1, 1, 1

$\leftarrow T_{CP} \rightarrow \leftarrow$    $T_{FFT}$    $\rightarrow \leftarrow T_{CP} \rightarrow \leftarrow$    $T_{FFT}$

## FIG. 7

FIG. 8

FIG. 9

FIG. 10

A signal receiving device receives a first signal based on a first resource block, where the first signal includes a sensing signal, the first resource block includes a first sensing resource block, a time domain resource block of the first sensing resource block includes at least two continuous time domain units, all modulation symbols of the time domain resource block of the first sensing resource block on a same frequency domain unit are the same, and initial phase values of different time domain units in the time domain resource block of the first sensing resource block on the same frequency domain unit satisfy a first relationship, to implement continuous sensing signal phases of adjacent time domain units in the time domain resource block of the first sensing resource block on the same frequency domain unit

1101

FIG. 11

FIG. 12

FIG. 13

FIG. 14

FIG. 15

FIG. 16

1700

Radio frequency unit — 1701

Network module — 1702

1710

Memory — 1709
Application
Operating system

Audio output unit — 1703

1704

Input unit
Graphics processing unit — 17041
Microphone — 17042

Interface unit — 1708

Processor

User input unit — 1707
Touch panel — 17071
Another input device — 17072

Display unit — 1706
Display panel — 17061

Sensor — 1705

FIG. 17

1800

1801

Signal receiving device

Processor — 1804

Radio frequency apparatus — 1802

Bus interface

Baseband apparatus — 1803

Memory — 1805

Network interface

1806

FIG. 18

## INTERNATIONAL SEARCH REPORT

| International application No. |
| --- |
| **PCT/CN2024/076501** |

**A.    CLASSIFICATION OF SUBJECT MATTER**

H04L25/03(2006.01)i

According to International Patent Classification (IPC) or to both national classification and IPC

**B.    FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

VCN; ENTXT; DWPI; 3GPP: 感知, 感测, 时域, 频域, 调制, 相位, 相邻, 连续, sensing, time, frequency, domain, OFDM, BPSK, QPSK, phase, adjacency, continuous

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115442006 A (VIVO MOBILE COMMUNICATION CO., LTD.) 06 December 2022 (2022-12-06) description, paragraphs 115-195, and figure 2 | 1-33 |
| A | CN 102893628 A (HUAWEI TECHNOLOGIES CO., LTD. et al.) 23 January 2013 (2013-01-23) entire document | 1-33 |
| A | CN 111865863 A (SHANDONG UNIVERSITY) 30 October 2020 (2020-10-30) entire document | 1-33 |
| A | US 2013058432 A1 (NEC CORP.) 07 March 2013 (2013-03-07) entire document | 1-33 |
| A | XIAOMI COMMUNICATIONS. "Wireless Sensing in NR" *3GPP TSG RAN#94-E, RP-213176*, 17 December 2021 (2021-12-17), entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 April 2024** | **22 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/076501**

| Patent document cited in search report | | | Publication date (day/month/year) | Patent family member(s) | | | Publication date (day/month/year) |
|---|---|---|---|---|---|---|---|
| CN | 115442006 | A | 06 December 2022 | WO | 2022253236 | A1 | 08 December 2022 |
| CN | 102893628 | A | 23 January 2013 | WO | 2013091238 | A1 | 27 June 2013 |
| CN | 111865863 | A | 30 October 2020 | | None | | |
| US | 2013058432 | A1 | 07 March 2013 | JP | 5660120 | B2 | 28 January 2015 |
| | | | | EP | 2541818 | A1 | 02 January 2013 |
| | | | | WO | 2011104998 | A1 | 01 September 2011 |
| | | | | CN | 102783063 | A | 14 November 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310132367